(19) Europäisches Patentamt
European Patent Office
Office européen des brevets

(11) EP 1 527 079 B1

# (12) FASCICULE DE BREVET EUROPEEN

(45) Date de publication et mention de la délivrance du brevet:
**20.12.2006 Bulletin 2006/51**

(21) Numéro de dépôt: **03753662.0**

(22) Date de dépôt: **23.07.2003**

(51) Int Cl.:
***C07F 9/40*** (2006.01) ***C08F 4/00*** (2006.01)

(86) Numéro de dépôt international:
**PCT/FR2003/002328**

(87) Numéro de publication internationale:
**WO 2004/014926 (19.02.2004 Gazette 2004/08)**

(54) **ALCOXYAMINES ISSUES DE NITROXYDES BETA-PHOSPHORES**

ALKOXYAMINE ABGELEITET AUS BETA-PHOSPHORIERTEN NITROXIDEN

ALKOXYAMINES ORIGINATING FROM BETA-PHOSPHORYLATED NITROXIDES AND USE THEREOF IN RADICAL POLYMERISATION

(84) Etats contractants désignés:
**AT BE BG CH CY CZ DE DK EE ES FI FR GB GR HU IE IT LI LU MC NL PT RO SE SI SK TR**

(30) Priorité: **07.08.2002 FR 0210030**
**14.03.2003 FR 0303169**

(43) Date de publication de la demande:
**04.05.2005 Bulletin 2005/18**

(73) Titulaire: **Arkema France**
**92800 Puteaux (FR)**

(72) Inventeurs:
- **COUTURIER, Jean-Luc**
  **F-69006 Lyon (FR)**
- **GUERRET, Olivier**
  **F-64230 Mazerolles (FR)**
- **BERTIN, Denis**
  **Résidence Bastide Madeleine**
  **F-13380 Plan de Cuques (FR)**
- **GIGMES, Didier**
  **Résidence le Rove - Bât. B**
  **F-13005 Marseille (FR)**
- **MARQUE, Sylvain**
  **F-07530 Antraigues sur Volane (FR)**
- **TORDO, Paul**
  **F-13004 Marseille (FR)**
- **CHAUVIN, Florence**
  **F-39300 Sirod (FR)**
- **DUFILS, Pierre-Emmanuel**
  **F-13620 Carry-Le-Rouet (FR)**

(74) Mandataire: **Bonnel, Claudine et al**
**ARKEMA FRANCE**
**Département Propriété Industrielle**
**4-8 cours Michelet**
**La Défense 10**
**92091 Paris La Défense (FR)**

(56) Documents cités:
**WO-A-00/49027** **WO-A-00/71501**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

### DOMAINE TECHNIQUE

La présente invention a pour objet des hydroxylamines α,β,β-trisubstituées, ci-après désignées par alcoxyamines, obtenues notamment à partir de nitroxydes-β-phosphorés, utilisables comme amorceurs des polymérisations radicalaires.

### TECHNIQUE ANTERIEURE

Dans FR 2.789.991 A1, il est décrit des alcoxyamines issues de nitroxydes-β-phosphorés tels que le N-tertiobutyl, N-1 diéthyl-2,2-diméthylpropyl, 0-1-méthyl-1-méthoxy-carbonyléthylhydroxylamine qui, utilisées comme amorceurs des polymérisations ou copolymérisations d'au moins un monomère polymérisable par voie radicalaire, procurent un excellent contrôle de la polymolécularité tout en assurant une bonne vitesse de polymérisation ou de copolymérisation.
Cependant, la demanderesse a constaté que l'utilisation desdites alcoxyamines pour la polymérisation ou la copolymérisation de certains monomères polymérisables par voie radicalaire présentait quelques inconvénients.
Ainsi, l'obtention de hautes masses molaires est difficile à atteindre. En outre, on observe des risques d'emballement de la polymérisation avec des monomères ayant des grandes constantes de propagation (kp), comme certains acrylates, lorsque ces amorceurs sont utilisés seuls.
Sans que la demanderesse soit tenue à une quelconque explication, elle pense qu'au tout début de l'amorçage de la polymérisation de monomères ayant des kp élevés, en présence desdites alcoxyamines, il y a une production de radicaux hydrocarbonés R* qui se propagent très vite pour conduire à de très hautes masses, cette réaction initiale de propagation est très exothermique et on assite a un emballement de la polymérisation radicalaire. Le radical persistant nitroxyde > NO* formé à partir du clivage homolytique d'une alcoxyamine > N - O - A selon le schéma réactionnel :

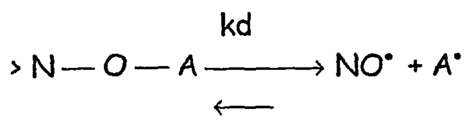


avec une constante cinétique de dissociation kd trop faible par rapport à kp, ne peut plus contrôler la réaction de polymérisation car il se trouve être en concentration insuffisante pour contrôler la croissance des chaînes et donc le dégagement de chaleur.
Afin de remédier à cet inconvénient, certains auteurs ont ajouté, en début de polymérisation, en plus de l'alcoxyamine, un nitroxyde (D. Benoit et col. J. Am. Chem. Soc., 121, pages 3904-3920, 1999).
Cette façon de procéder n'est pas satisfaisante industriellement car il faut adapter sans cesse le rapport alcoxyamine / nitroxyde au type de monomère ou mélange de monomères à polymériser et à la température de polymérisation.
D'autre part, l'utilisation desdites alcoxyamines contrôle très difficilement la polymérisation des méthacrylates d'alkyle comme le méthacrylate de méthyle (MMA) ou la copolymérisation de mélanges de monomères contenant des proportions importantes de méthacrylates d'alkyle.

### EXPOSE DE L'INVENTION

La demanderesse a maintenant trouvé que l'utilisation de certaines alcoxyamines dérivées notamment de nitroxydes β-phosphorés comme amorceurs des polymérisations ou copolymérisations d'au moins un monomère polymérisable par voie radicalaire permettait d'obvier les inconvénients mentionnés ci-dessus.
L'invention a donc pour objet l'utilisation d'alcoxyamines de formule :

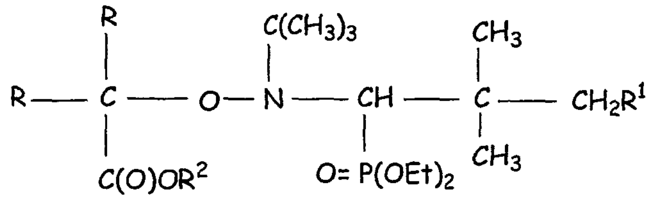

(I)

dans laquelle R représente un radical alkyle, linéaire ou ramifié, ayant un nombre d'atomes de carbone allant de 1 à 3, $R^1$ représente un atome d'hydrogène ou un reste :

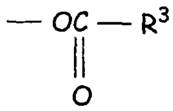

dans lequel $R^3$ représente un radical alkyle linéaire ou ramifié, ayant un nombre d'atomes de carbone allant de 1 à 20 ; $R^2$ représente un atome d'hydrogène, un radical alkyle, linéaire ou ramifié, ayant un nombre d'atomes de carbone allant de 1 à 8, un radical phényle, un métal alcalin tel que Li, Na, K ; $H_4N^+$, $Bu_4N^+$, $Bu_3HN^+$ et présentant une constante cinétique de dissociation kd, mesurée à 120°C par RPE, supérieure à 0,05 $s^{-1}$ et, de préférence supérieure à 0,1 $s^{-1}$.

Parmi les alcoxyamines de formule (I), on préfère utiliser tout particulièrement celles dans lesquels R= $CH_3$-, $R^1$ = H et $R^2$ = H, $CH_3$-, $(CH_3)_3C$-, Li et Na.

Les alcoxyamines de formule (I) dans laquelle $R^1$=H et $R^2$ représente un radical alkyle, linéaire ou ramifié, ayant un nombre d'atomes de carbone allant de 1 à 6 sont connues.

L'invention a donc également pour objet les alcoxyamines de formule (I), à l'exclusion des alcoxyamines de formule (I) dans laquelle $R^1$=H et $R^2$ représente un radical alkyle, linéaire ou ramifié, ayant un nombre d'atomes de carbone, allant de 1 à 6.

Les alcoxyamines de formule (I) peuvent être préparées selon des méthodes connues dans la littérature. La méthode la plus courante implique le couplage d'un radical carboné avec un radical nitroxyde.

Parmi toutes ces méthodes, on utilisera de préférence pour la préparation des composés de formule (I), la méthode mettant en jeu la réaction dite ATRA (Atom Transfer Radical Addition), comme décrite dans FR 2.791.979 A1 intégrée dans la présente par référence.

Cette méthode consiste à faire réagir un nitroxyde de formule :

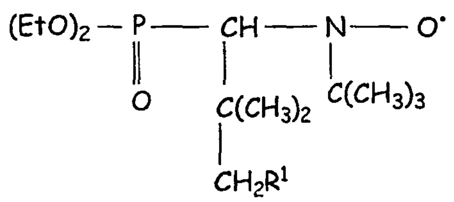

(II)

avec un dérivé halogéné de formule :

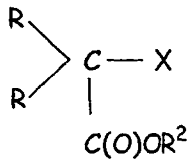

(III)

dans laquelle X représente un atome de chlore ou un atome de brome, R, $R^1$ et $R^2$ ayant la même signification que dans la formule (I), en milieu solvant organique non miscible à l'eau, en présence d'un système organométallique MA $(L)_n$ (IV), dans lequel :

M représente un métal tel que Cu, Ag et/ou Au et de préférence Cu.

A représente un atome de chlore ou un atome de brome,
L représente un ligand du métal M, et est choisi parmi des polyamines telles que :

- la tris[2-(diméthylamino)éthyl]amine :

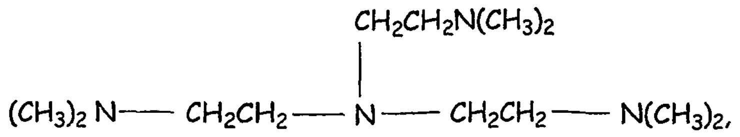

- la N, N, N', N', N" - pentaméthyldiéthylènetriamine (PMDETA) :

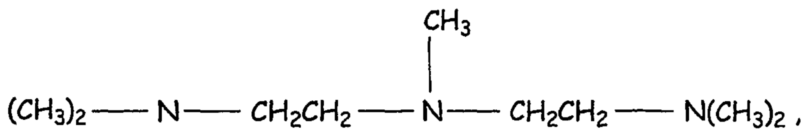

- la N,N,N',N'-tétraméthyléthylènediamine :

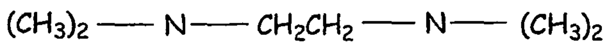

- la 1, 1, 4, 7, 10, 10-hexaméthyltriéthylènetétramine (HMTETA) :

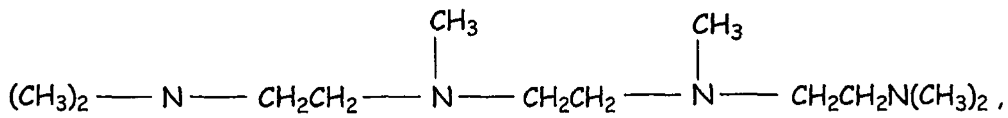

les polyamines cycliques telles que :

- le 1,4,7-triméthyl-1,4,7-triazacyclononane,
- le 1,5,9-triméthyl-1,5,9-triazacyclododécane,
- le 1,4,8,11-tétraméthyl-1,4,8,11-tétraazacyclotétradécane, en mélangeant sous agitation dans le solvant organique un sel métallique MA, le ligand L, le dérivé halogéné (III) et le nitroxyde (II) selon un rapport molaire (III)/(II) allant de 1 à 1,4 et en maintenant le milieu réactionnel sous agitation à une température comprise entre 20°C et 40°C jusqu'à disparition complète du nitroxyde (II), puis en récupérant la phase organique qui est lavée avec de l'eau, puis en isolant l'alcoxyamine (I) par évaporation du solvant organique sous pression réduite.

Comme solvants organiques, on utilisera de préférence les hydrocarbures aromatiques tel que le benzène, le toluène, les xylènes, les chlorures d'alkyle, et noatmment $CH_2Cl$ et/ou les éthers.
Le sel métallique utilisé de préférence est CuBr.
On peut également introduire dans le milieu réactionnel CuBr (dans lequel le cuivre est au degré d'oxydation 1) et du cuivre.
Les sels alcalins des alcoxyamines (I) ($R^2$= Li, Na, K) peuvent être obtenus aisément par exemple en dissolvant, à froid, l'alcoxyamine (I) sous forme acide ($R^2$=H) dans un minimum de méthanol puis on ajoute 1,05 équivalent d'hydroxyde alcalin dans un minimum d'eau. Le mélange eau / méthanol est évaporé sous pression réduite et l'eau restant est éliminée azéotropiquement au moyen du cyclohexane ou du benzène.
Les alcoxyamines de formule (I) selon la présente invention peuvent être utilisées pour la polymérisation et la copolymérisation de tout monomère présentant une double liaison carbone-carbone susceptible de polymériser par voie

radicalaire. La polymérisation ou la copolymérisation est réalisée, dans les conditions habituelles connues de l'homme du métier compte tenu du ou des monomères considérés, en masse, en solution, en émulsion en suspension ou en miniémulsion. Les monomères considérés peuvent être choisis parmi les monomères vinylaromatiques tels que le styrène ou les styrènes substitués notamment l'$\alpha$-méthylstyrène et le styrène sulfonate de sodium, les diène tels que le butadiène ou l'isoprène, les monomères acryliques tel que l'acide acrylique ou ses sels, les acrylates d'alkyle, de cycloalkyle ou d'aryle tels que l'acrylate de méthyle, d'éthyle, de butyle, d'éthylhexyle ou de phényle, les acrylates d'hydroxyalkyle tel que l'acrylate de 2-hydroxyéthyle, les acrylates d'étheralkyle tel que l'acrylate de 2-méthoxyéthyle, les acrylates d'alcoxy-ou aryloxy-polyalkylèneglycol tels que les acrylates de méthoxypolyéthylèneglycol, les acrylates d'éthoxypolyéthylèneglycol, les acrylates de méthoxypolypropylèneglycol, les acrylates de méthoxy-polyethylèneglycol-polypropylèneglycol ou leurs mélanges, les acrylates d'aminoalkyle tel que l'acrylate de 2-(diméthylamino)éthyle (ADAME), les acrylates de sel d'amines tels que le chlorure ou le sulfate de [2-(acryloyloxy)éthyl]triméthylammonium ou le chlorure ou le sulfate de [2-(acryloyloxy)éthyl]diméthylbenzylammonium, les acrylates fluorés, les acrylates silylés, les acrylates phosphorés tels que les acrylates de phosphate d'alkylèneglycol, les monomères méthacryliques comme l'acide méthacrylique ou ses sels, les méthacrylates d'alkyle, de cycloalkyle, d'alkényle ou d'aryle tels que le méthacrylate de méthyle, de lauryle, de cyclohexyle, d'allyle ou de phényle, les méthacrylates d'hydroxyalkyle tel que le méthacrylate de 2-hydroxyéthyle ou le méthacrylate de 2-hydroxypropyle, les méthacrylates d'étheralkyle tel que le méthacrylate de 2-éthoxyéthyle, les méthacrylates d'alcoxy- ou aryloxy-polyalkylèneglycol tels que les méthacrylates de méthoxypolyéthylèneglycol, les méthacrylates d'éthoxypolyéthylèneglycol, les méthacrylates de méthoxypolypropylèneglycol, les méthacrylates de méthoxy-polyethylèneglycol-polypropylèneglycol ou leurs mélanges, les méthacrylates d'aminoalkyle tel que le méthacrylate de 2-(diméthylamino)éthyle (MADAME), les méthacrylates de sel d'amines tels que le chlorure ou le sulfate de [2-(méthacryloyloxy)éthyl]triméthylammonium ou le chlorure ou le sulfate de [2-(méthacryloyloxy)éthyl] diméthylbenzylammonium, les méthacrylates fluorés tels que le méthacrylate de 2,2,2-trifluoroéthyle, les méthacrylates silylés tels que le 3-méthacryloylpropyltriméthylsilane, les méthacrylates phosphorés tels que les méthacrylates de phosphate d'alkylèneglycol, le méthacrylate d'hydroxyéthylimidazolidone, le méthacrylate d'hydroxyéthylimidazolidinone, le méthacrylate de 2-(2-oxo-1-imidazolidinyl)éthyle, l'acrylonitrile, l'acrylamide ou les acrylamides substitués, la 4-acryloylmorpholine, le N-méthylolacrylamide, le chlorure d'acrylamidopropyltriméthylammonium (APTAC), l'acide acrylamidométhylpropane-sulfonique (AMPS) ou ses sels, le méthacrylamide ou les méthacrylamides substitués, le N-méthylolméthacrylamide, le chlorure de méthacrylamidopropyltriméthyl ammonium (MAPTAC), l'acide itaconique, l'acide maléique ou ses sels, l'anhydride maléique, les maléates ou hémimaléates d'alkyle ou d'alcoxy- ou aryloxy-polyalkylèneglycol, la vinylpyridine, la vinylpyrrolidinone, les (alkoxy) poly(alkylène glycol) vinyl éther ou divinyl éther, tels que le méthoxy poly(éthylène glycol) vinyl éther, le poly(éthylène glycol) divinyl éther, seuls ou en mélange d'au moins deux monomères précités.

Les alcoxyamines (I) peuvent être introduites dans le milieu de polymérisation ou de copolymérisation à des teneurs allant en général de 0,005 % à 40 % en poids par rapport au(x) monomère(s) mis en oeuvre et, de préférence, à des teneurs allant de 0,01 % à 10 %.

L'invention a donc également pour objet les (co)polymères fonctionnels obtenus par un procédé de (co)polymérisation utilisant les alcoxyamines de formule (I) comme amorceurs.

L'utilisation des alcoxyamines (I) de l'invention présente de nombreux avantages.

Elles permettent d'obtenir des hautes masses molaires avec un bon contrôle et un faible indice de polymolécularité. On n'observe aucun emballement de la polymérisation, notamment dans le cas de monomères à haut kp comme l'acrylate de butyle, et ce, en absence de nitroxyde libre. Elles permettent un contrôle (partiel) de la polymérisation des méthacrylates d'alkyles comme le MMA, notamment dans le cas de mélange de monomères contenant au moins 85 % de méthacrylate d'alkyle.

Dans le cas où $R^2$ est un hydrogène, un métal alcalin ou un radical tertiobutyle, elles permettent également d'obtenir des (co)polymères fonctionnels présentant des fonctions réactives qui permettent de réaliser des transformations chimiques telles que greffage, couplage.

Ces procédés de transformations chimiques impliquent de préférence des réactions d'estérification, de transestérification, d'amidification, de transamidification et d'ouverture d'époxydes. On ne sortirait pas du cadre de l'invention si, pour les réactions d'estérification ou d'amidification, on utilisait intermédiairement un chlorure d'acide.

Les procédés d'estérification peuvent en particulier être utilisés avantageusement pour préparer des polyalcoxyamines polymériques à partir de monoalcoxyamines polymériques selon le schéma suivant :

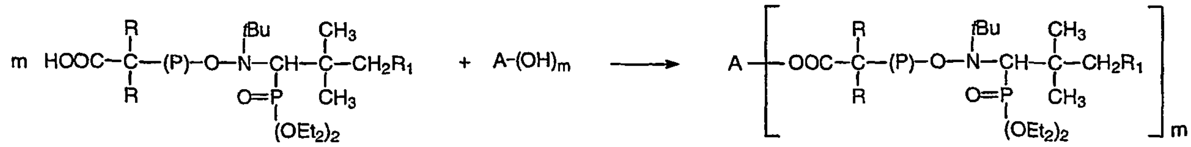

où A représente une structure polyvalente et P un enchaînement de monomères tels que le styrène et les styrènes substitués, les diènes, les monomères acryliques comme l'acide acrylique ou les acrylates d'alkyle, les monomères méthacryliques comme l'acide méthacrylique ou les méthacrylates d'alkyle, l'acrylonitrile, l'acrylamide, la vinylpyrrolidinone ou encore un mélange d'au moins deux monomères précités.

Les procédés d'estérification et d'amidification peuvent également être utilisés avantageusement pour condenser des polymères qui ne sont pas obtenus par polymérisation radicalaire comme les polyesters, les polyamides ou les polyépoxydes. Ce réactions permettent ainsi d'accéder à de multiples structures de copolymères à blocs comme polystyrène-polyester, polystyrène-polyamide, polystyrène-polyépoxyde, polyacrylate-polyester, polyacrylate-polyamide, polyacrylate-polyépoxyde.

Les alcoxyamines de formule (I) de la présente invention, présentent en outre l'avantage d'être des solides stables facilement purifiables. Sans que la demanderesse soit tenue à une quelconque explication, on pense que cet état résulte du fait que dans l'alcoxyamine de formule (I), le carbone porteur des radicaux R et $R^2$ ne présente pas d'asymétrie contrairement aux alcoxyamines mentionnées dans FR 2,789,991 A1.

Les exemples qui suivent illustrent l'invention.

<u>REMARQUES GENERALES</u> :

- Le nitroxyde utilisé comme réactif a pour formule :

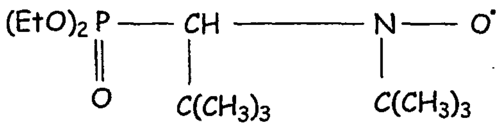

désigné ci-après SG1.

Il a été obtenu par oxydation du 2,2-diméthyl-1-(1,1-diméthylamino)propyl phosphonate de diéthyle avec l'acide peracétique selon un protocole décrit dans FR 2,788,270.

- Les composés obtenus dans les exemples de synthèse sont identifiés par microanalyse C, H, N et par RMN du $^1H$, du $^{13}C$ et du $^{31}P$.

  Les spectres de RMN ont été effectués sur un appareil BRUKER AC 400 ($^1H$, 100 MHz ; $^{31}P$, 40,53 MHz ; $^{13}C$, 25,18 MHz). Les RMN $^{13}C$ et $^{31}P$ sont réalisées avec découplage au $^1H$.

  Les déplacements chimiques $\delta$ sont donnés en ppm, par rapport au tétraméthylsilane (référence interne) pour le proton et le carbone, par rapport à $H_3PO_4$ à 85 % (référence externe) pour le phosphore.

  Les solvants utilisés sont soit $CDCl_3$, soit $C_6D_6$.
- Les constantes cinétiques de dissociation kd ont été mesurées à 120°C par résonance paraélectronique quantitative (RPE) selon la méthode décrite par Sylvain Marque et col., dans Macromolécules, 33, pages 4403 à 4410, 2000.

Le principe consiste à piéger entièrement et rapidement, dès sa formation, le radical transistoire hydrocarboné, par un nitroxyde tel que le galvinoxyde (2,6-di-tert-butyl-4-(3,5-di-tert-butyl-4-oxocyclohexa-2,5-dien-1-ylidenméthyl) phenoxyde) pour conduire à une autre alcoxyamine non réactive.

➢ **<u>Exemple 1 :</u>**

Préparation de l'acide 2-méthyl-2-[N-tertiobutyl-N-(diéthoxyphosphoryl-2,2-diméthylpropyl)aminoxy]propionique.

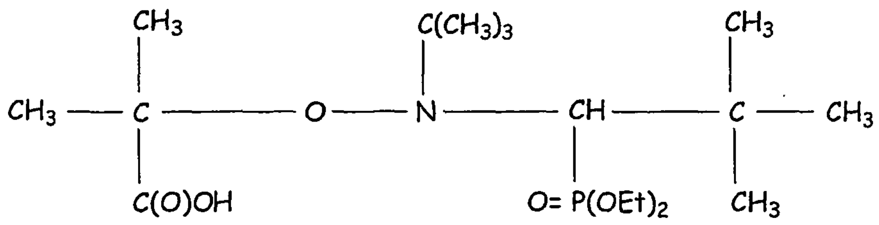

➢ mode opératoire :

Dans un réacteur en verre de 2 l purgé à l'azote, on introduit 500 ml de toluène dégazé, 35,9 g de CuBr (250 mmol), 15,9 g de cuivre en poudre (250 mmol), 86,7 g de N,N,N',N',N"-pentaméthyl-diéthylènetriamine-PMDETA-(500 mmol) puis, sous agitation et à température ambiante (20°C), on introduit un mélange contenant 500 ml de toluène dégazé, 42,1 g d'acide 2-bromo-2-méthylpropionique (250 mmol) et 78,9 g de SG1 à 84 % soit 225 mmol.

On laisse réagir 90 minutes à température ambiante et sous agitation, puis on filtre le milieu réactionnel. Le filtrat toluénique est lavé deux fois avec 1,5 l d'une solution aqueuse saturée en $NH_4Cl$.

On obtient un solide jaunâtre qui est lavé au pentane pour donner 51 g d'acide 2-méthyl-2-[N-tertiobutyl-N-(diéthoxyphosphoryl-2,2-diméthylpropyl)aminoxy]propionique (rendement 60 %).

Les résultats analytiques sont donnés ci-après :

- masse molaire déterminée par spectrométrie de masse : 381,44 / g.mol$^{-1}$ (pour $C_{17}H_{36}NO_6P$)
- analyse élémentaire (formule brute : $C_{17}H_{36}NO_6P$) :

| | | | |
|---|---|---|---|
| % calculé : | C=53,53, | H=9,51, | N=3,67 |
| % trouvé : | C=53,57, | H=9,28, | N=3,77 |

- fusion effectuée sur appareil Büchi B-540 : 124°C / 125°C

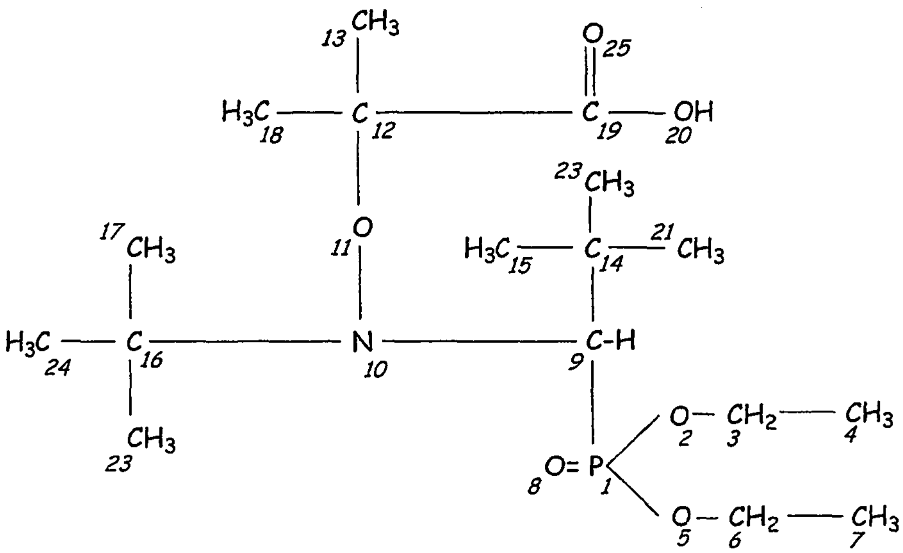

• RMN $^{31}P$ ($CDCl_3$): δ 27,7
• RMN $^1H$ ($CDCl_3$) :

δ 1,15 (singulet, 9H sur carbones 15, 21 et 22),
δ 1,24 (singulet, 9H sur carbones 17, 23 et 24),
δ 1,33-1,36 (multiplet, 6H sur carbones 4 et 7),
δ 1,61 (multiplet, 3H sur carbone 18),
δ 1,78 (multiplet, 3H sur carbone 13),

δ 3,41 (doublet, 1H sur carbone 9),
δ 3,98-4,98 (multiplet, 4H sur carbone 3 et 6)
δ 11,8 (singulet -OH).

- RMN $^{13}C$ ($CDCl_3$) :

| N° atome de carbone | δ |
|---|---|
| 3 et 6 | 60,28 - 63,32 |
| 9 | 69,86 |
| 12 | 63 |
| 13 | 28,51 |
| 14 | 36,04 |
| 15, 21 et 22 | 29,75 |
| 16 | 63,31 |
| 17, 23 et 24 | 28,74 |
| 18 | 24,08 |
| 19 | 176,70 |

kd (120°C) = 0,2 $s^{-1}$.

➢ **Exemples 1A et 1B :**

Synthèse de 2-méthyl-2-[N-tertiobutyl-N-(1-diéthoxyphosphoryl-2,2-diméthylpropyl)aminoxy] propionates d'alkyle.

➢ mode opératoire :

Dans un ballon mini d'un septum, on place du bromure cuivreux CuBr, du cuivre $Cu^0$, et du benzène anhydre. La solution est ensuite déoxygénée au moyen d'un barbotage d'azote pendant 10 minutes. On introduit ensuite sous atmosphère inerte la N,N, N',N',N''-pentaméthyldiéthylènetriamine (PMDETA). Le barbotage d'azote est maintenu 10 minutes supplémentaires.
Dans un autre ballon, on place l'ester α-bromé et le nitroxyde SG1 dans du benzène anhydre. La solution est également dégazée par barbotage d'azote pendant 10 minutes. Cette solution est ensuite transférée dans le premier ballon sous atmosphère inerte. Le mélange réactionnel refroidi au moyen d'un mélange eau / glace est maintenu sous agitation magnétique 15 min, puis 45 min à température ambiante. La solution est ensuite filtrée sur celite et le précipité est lavé à l'éther. Le filtrat est lavé à l'eau glacée jusqu'à obtention d'une phase aqueuse incolore. La phase organique est séchée sur $MgSO_4$ à 0°C, évaporée dans un premier temps à l'évaporateur rotatif ROTAVAPOR puis sur rampe à pression réduite 0,08 mbar.

➢ **Exemple 1A :**

Synthèse du 2-méthyl-2-[N-tertiobutyl-N-(1-diéthoxyphosphoryl-2,2-diméthylpropyl)aminoxyl propionate de tertiobutyle.

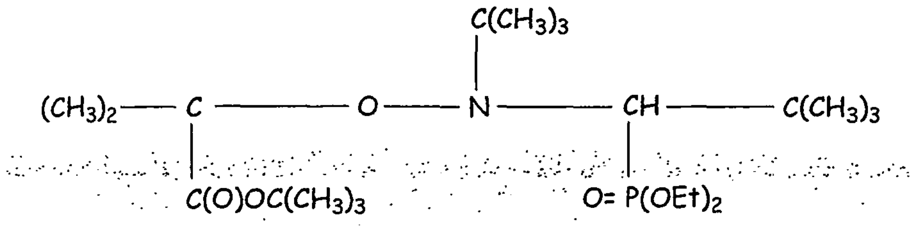

*Réactifs :* Benzène (18 ml + 18 ml). CuBr : 1,47 g (10,2 mmol), $Cu^0$ : 0,65 g (10,2 mmol), PMDETA : 4,3 ml (20,4 mmol), SG1 : 2 g (6,8 mmol) ; 2-bromo-2-méthylpropionate de tertiobutyle : 2,23 g (10,2 mmol). L'alcoxyamine obtenue, est purifiée sur colonne de silice en utilisant comme éluant un mélange pentane / éther éthylique 3/1. L'alcoxyamine se solidifie à -18°C pour donner une poudre blanche. Rendement 70 %.
kd (120°C) = 0,2 $s^{-1}$.
Fusion : 44-46°C
RMN$^{31}$P ($CDCl_3$, 121,59 MHz) : δ 25,50 ppm.
RMN $^1$H ($CDCl_3$, 300 MHz) : δ 1,12 ppm (s, 9 H) ; 1,20 (s, 9 H), 1,29 (m, 6 H) ; 1,46 (s, 9 H), 1,55 (s, 3 H) ; 1,67 (s, 3 H) ; 3,28 (d, $J_{H-P}$ = 27 Hz, 1 H) ; 3,90-4,16 (m, 2 H); 4,27-4,45 (m, 2 H).
RMN $^{13}$C ($CDCl_3$, 75,48 MHz): δ 16,27 ppm (d, $J_{C-P}$ = 6,8 Hz, O-$CH_2$-$\underline{C}H_3$); 16,65 (d, $J_{C-P}$ = 5,3 Hz, O-$CH_2$-$\underline{C}H_3$) ; 22,01 (s, $\underline{C}H_3$-C($CH_3$)-C=O) ; 27,93 (s, tBu) ; 28,15 (s, tBu) ; 28,77 (s, $\underline{C}H_3$-C($CH_3$)-C=O) ; 30,18 (d, $J_{C-P}$ = 4,52 Hz, CH-C-($\underline{C}H_3$)$_3$ ; 36,00 (d, $J_{C-P}$ = 6,0 Hz, CH-$\underline{C}$-($CH_3$)$_3$); 58,62 (d, $J_{C-P}$ = 7,5 Hz, O-$\underline{C}H_2$-$CH_3$); 61,68 (d, $J_{C-P}$ = 6,0 Hz, O-$\underline{C}H_2$-$CH_3$) ; 62,08 (s, N-$\underline{C}$-($CH_3$)$_3$) ; 69,93 (d, $J_{C-P}$ = 137,4 Hz, CH-P) ; 80,81 (s, O-$\underline{C}$-($CH_3$)$_3$) ; 84,41 (s, ($CH_3$)$_2$-$\underline{C}$-C=O); 174,39 (s, C=O).

➢ **Exemple 1B :**

Synthèse du 2-méthyl-2-[N-tertiobutyl-N-(1-diéthoxyphosphoryl-2,2-diméthylpropyl)aminoxy] propionate de méthyle.

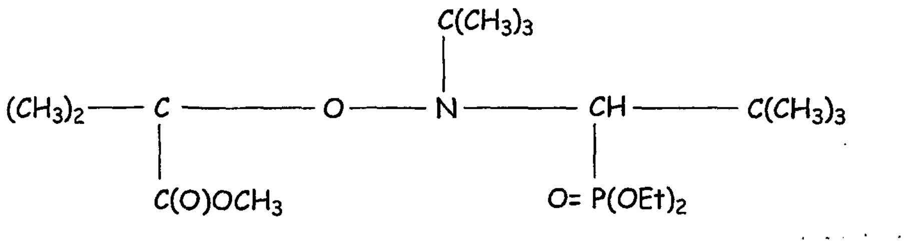

Réactifs : identiques à l'exemple 1A, excepté que l'on remplace le 2-bromo-2-méthylpropionate de tertiobutyle par la même quantité molaire de 2-bromo-2-méthylpropionate de méthyle : (10,2 mmol).
L'alcoxyamine est obtenue sans purification supplémentaire et se solidifie à -18°C pour donner une poudre blanche.
kd (120°C) = 0,8 $s^{-1}$.
Fusion : 56-58°C
RMN du $^{31}$P, $^{13}$C et $^1$H sont en accord avec celles mentionnées dans la demande de brevet français n° 2 789 991.

➢ **Exemple 1C :**

Synthèse du 2-méthyl-2-[N-tertiobutyl-N-(1-diéthoxyphosphoryl-2,2-diméthylpropyl)aminoxy] propionate de sodium.

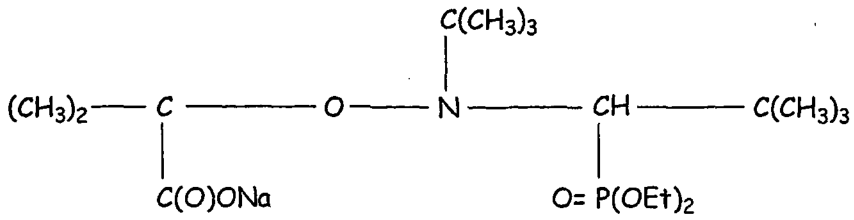

L'alcoxyamine acide méthylpropionique / SG1 obtenue à l'exemple 1 est dissoute dans un minimum de méthanol. Puis, on y ajoute 1,05 équivalent de soude dissoute dans un minimum d'eau. Le mélange eau / méthanol est évaporé sous pression réduite jusqu'à obtention du sel de sodium qui se présente sous forme d'un solide blanc. On rajoute du cyclohexane afin d'éliminer les traces d'eau par distillation de l'azéotrope eau / cyclohexane.

Analyse élémentaire (formule brute $C_{17}H_{35}NO_6PNa$)

| | | | |
|---|---|---|---|
| Pourcentage calculé : | C = 50,61; | H = 8,74 ; | N = 3,47 |
| Pourcentage trouvé : | C = 49,29 ; | H = 8,97 ; | N = 3,01 |

kd (120°C) = 0,2 $s^{-1}$

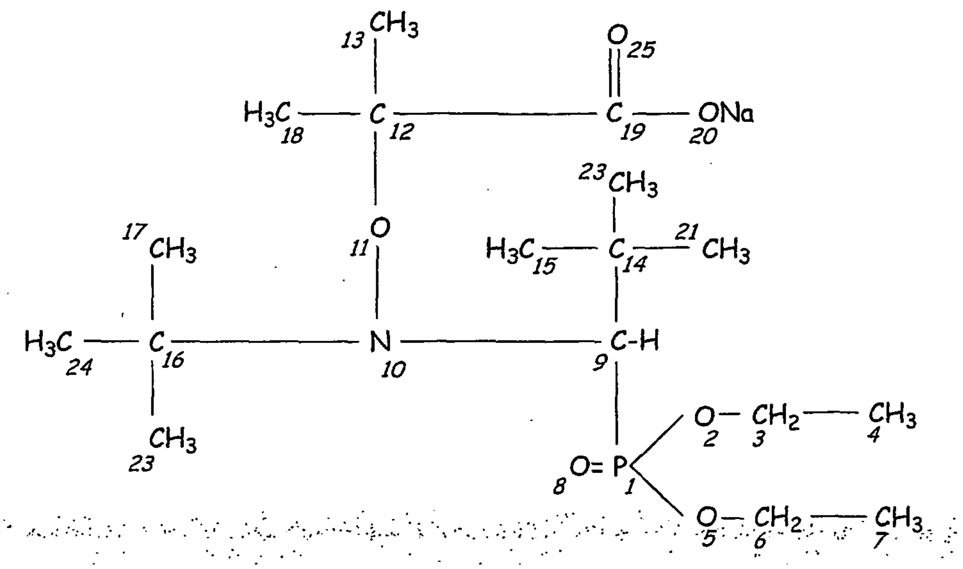

- RMN $^{31}P$ ($C_6D_6$) : δ 28,05
- RMN $^{1}H$ ($C_6D_6$) :

  δ 1,24-1,48 (massif, 24H sur carbones 4, 7, 15, 17, 21 et 24),
  δ 1,91 (singulet, 3H sur carbone 18),
  δ 2,07 (singulet, 3H sur carbone 13),
  δ 3,43 (doublet, 1H sur carbone 9),
  δ 4,15-4,6 (massif, 4H sur carbone 3 et 6)

- RMN $^{13}C$ ($C_6D_6$) :

| N° atome de carbone : | δ |
|---|---|
| 3,6 | 61,33-61,42 |
| 4,7 | 16,55-16,70 |

(suite)

| N° atome de carbone : | δ |
|---|---|
| 9 | 71,08 |
| 12 | 86,36 |
| 13/18 | 24-29,10 |
| 14 | 36,24 |
| 15,21 et 22 | 30,23 |
| 16 | 62,42 |
| 17,28 et 24 | 29,27 |
| 19 | 180,74 |

➢ **Exemples 2, 3 et 4 :**

Utilisation de l'acide 2-méthyl-2-[N-tertiobutyl-N-(diéthoxyphosphoryl-2,2-diméthylpropyl)aminoxy] ci-après acide méthylpropionique/SG1 comme amorceur dans la polymérisation de l'acrylate de butyle.

➢ Mode opératoire général :

bans un réacteur en verre de 100 ml, muni d'un réfrigérant, d'une arrivée de gaz inerte ($N_2$) et d'une sonde de température, nous avons introduit-x g d'alcoxyamine et 60 g d'acrylate de butyle (BA). Le milieu a été dégazé par barbotage d'azote pendant 20 minutes, puis placé sous agitation magnétique dans un bain d'huile thermostaté à 120°C. A intervalles de temps réguliers, des échantillons ont été prélevés sous atmosphère inerte.

La RMN du proton nous a permis de suivre la conversion du monomère. La détermination des masses molaires moyennes du polymère et de leur indice de polymolécularité a été réalisée par chromatographie d'exclusion stérique (CES), grâce à une calibration universelle utilisant des standards de polystyrène et tes coefficients de Mark-Houwink du polyacrylate de butyle dans le THF. Les chromatogrammes ont été enregistrés par un logiciel Millénium 32 muni d'une pompe Waters 515HPLC, d'un réfractomètre WATERS 2410, de 3 colonnes Styragel (éluant : THF, 30°C).

➢ **Exemple 2 (conforme à l'invention):**

- x = 0,304 g d'alcoxyamine acide méthylpropionique/SG1 obtenue selon l'exemple 1,
- la masse théorique $Mn_{th}$ visée, exprimée comme étant le rapport de la concentration initiale du monomère multiplié par la masse molaire du monomère sur la concentration initiale en alcoxyamine, à 100% de conversion est de 75 000 $g.mol^{-1}$.

➢ **Exemple 3 (conforme à l'invention):**

- x = 0,114 g d'alcoxyamine acide méthylpropionique/SG1,
- $Mn_{th}$ = 200 000 $g.mol^{-1}$

➢ **Exemple 4 (non-conforme à l'invention):**

- x = 0,114 g de MONAMS, plus 2 mg de SG1
  MONAMS : N-tertiobutyl, N-1-diéthylphospho-2,2-diméthylpropyl, O-1-méthyl-1-méthoxycarbonyl-éthylhydroxylamine.
- $Mn_{th}$ visée avec la MONAMS est de 200 000 $g.mol^{-1}$

Les résultats sont reportés dans les tableaux 1 (exemple 2), 2 (exemple 3) et 3 (exemple 4) ci-après. Dans ces tableaux, t(s) représente le temps de polymérisation en secondes,
Tc le taux de conversion,
Ip l'indice de polymolécularité qui est le rapport Mw / Mn.

TABLEAU 1 ~ Résultats de l'exemple 2

| t(s) | Tc | ln(1/(1-Tc)) | Mn(th) | Mn | Mw | Ip |
|---|---|---|---|---|---|---|
| 0 | 0 | 0 | | | | |
| 300 | 0,09 | 0,094 | 6300 | 5700 | 10500 | 1,84 |
| 1800 | 0,32 | 0,385 | 22400 | 23600 | 31800 | 1,35 |
| 3600 | 0,52 | 0,729 | 36300 | 35200 | 44400 | 1,26 |
| 6300 | 0,72 | 1,272 | 50400 | 44300 | 56400 | 1,27 |

Les résultats permettent de tracer les courbes cinétiques suivantes associées à chaque exemple :

- ln(1/1 - Tc) en fonction du temps ; Mn(th), Mn et Ip en fonction du taux de conversion Tc.

DESCRIPTION DES FIGURES

Les courbes cinétiques correspondant aux résultats de l'exemple 2 sont représentées sur les figures suivantes :

Figure 1 : ln (1/(1-Tc) = f(t) ;
Figure 2 : $Mn_{(th)}$, Mn, Ip = f(Tc)

TABLEAU 2 ~ Résultats de l'exemple 3

| t(s) | Tc | ln(1/(1-Tc)) | Mn(th) | Mn | Mw | Ip |
|---|---|---|---|---|---|---|
| 0 | 0 | 0 | | | | |
| 720 | 0,05 | 0,048 | 9400 | 35500 | 50500 | 1,42 |
| 1200 | 0,11 | 0,116 | 22000 | 47500 | 66300 | 1,40 |
| 2400 | 0,25 | 0,287 | 50000 | 74500 | 108900 | 1,46 |
| 3300 | 0,53 | 0,755 | 106000 | 86300 | 148700 | 172 |
| 6000 | 0,62 | 0,967 | 124000 | 89700 | 172000 | 1,92 |
| 8400 | 0,79 | 1,560 | 158000 | 96800 | 168100 | 1,74 |
| 9600 | 0,80 | 1,609 | 160000 | 110900 | 177200 | 1,60 |
| 12600 | 0,82 | 1,714 | 164000 | 141800 | 220700 | 1,56 |

Les courbes cinétiques correspondant aux résultats de l'exemple 3 sont représentées sur les figures suivantes :

Figure 3 : ln (1/(1-Tc) = f(t) ;
Figure 4 : $Mn_{(th)}$, Mn, Ip = f(Tc)

TABLEAU 3 ~ Résultats de l'exemple 4

| t(s) | Tc | ln(1/(1-Tc)) | Mn(th) | Mn | Mw | Ip |
|---|---|---|---|---|---|---|
| 0 0 | 0 | 0 | | | | |
| 600 | 0,06 | 0,060 | 12000 | 27700 | 38400 | 1,39 |
| 1500 | 0,13 | 0,139 | 26000 | 53900 | 94900 | 1,76 |

(suite)

| t(s) | Tc | ln(1/(1-Tc)) | Mn(th) | Mn | Mw | Ip |
|---|---|---|---|---|---|---|
| 2700 | 0,24 | 0,274 | 48000 | 66600 | 106800 | 1,60 |
| 3600 | 0,56 | 0,820 | 112000 | 88900 | 130800 | 1,47 |
| 5400 | 0,65 | 1,049 | 130000 | 104200 | 155800 | 1,50 |
| 7200 | 0,71 | 1,237 | 142000 | 100500 | 190600 | 1,60 |
| 10800 | 0,75 | 1,386 | 150000 | 103300 | 177600 | 1,72 |
| 13200 | 0,76 | 1,427 | 152000 | 113900 | 198300 | 1,74 |
| 19800 | 0,79 | 1,560 | 158000 | 105800 | 264800 | 2,50 |

Les courbes cinétiques correspondant aux résultats de l'exemple 2 sont représentées sur les figures suivantes :

Figure 5 : ln (1/(1-Tc) = f(t) ;
Figure 6 : $Mn_{(th)}$, Mn, Ip = f(Tc)

Le bon alignement des points sur les figures 1, 2, 3 et 4 des courbes et le faible indice de polymolécularité (Ip) sont caractéristiques d'une polymérisation radicalaire contrôlée de l'acrylate de butyle avec l'alcoxyamine acide méthylpropionique /SG1 de la présente invention.

➢ **Exemple 5 :**

Utilisation de l'alcoxyamine acide méthylpropionique/SG1 comme amorceur dans la copolymérisation du méthacrylate de méthyle (MMA) avec l'acrylate de butyle (BA).

➢ **Mode opératoire :**

Dans un réacteur en verre de 100 ml, muni d'un réfrigérant, d'une double enveloppe avec circulation d'huile, d'une arrivée de gaz inerte ($N_2$) et d'une sonde de température, nous avons introduit 0,953 g d'alcoxyamine acide méthylpropionique /SG1, 42,5 g de MMA et 7,5 g de BA.

Le milieu a été dégazé par barbotage d'azote pendant 20 minutes, puis placé sous agitation mécanique et porté à 95°C. A intervalles réguliers, des échantillons ont été prélevés sous atmosphère inerte.

La RMN du proton nous a permis de suivre la conversion du monomère. La détermination des masses molaires moyennes du polymère et de leur indice de polymolécularité a été réalisé par CES, grâce à une calibration universelle utilisant des standards de poly(styrène) et les coefficients de Mark-Houwink du poly(acrylate de butyle) dans le THF.

Les résultats sont reportés dans le tableau 4, ci-après.

Dans ce tableau :
- Tc BA signifie taux de conversion de l'acrylate de butyle,
- Tc M signifie taux de conversion du méthacrylate de méthyle,
- Tc G signifie taux de conversion globale

TABLEAU 4 ~ Résultats de l'exemple 5

| T(s) | Tc BA | Tc M | Tc G | ln(1/1-TcBA) | ln(1/1-TcM) | ln(1/1-TcG) | Mn | Ip |
|---|---|---|---|---|---|---|---|---|
| 900 | 0,11 | 0,23 | 0,22 | 0,11 | 0,27 | 0,24 | 10400 | 1,47 |
| 2100 | 0,15 | 0,32 | 0,30 | 0,16 | 0,38 | 0,35 | 13500 | 1,37 |
| 3300 | 0,17 | 0,38 | 0,35 | 0,19 | 0,48 | 0,43 | 14700 | 1,41 |
| 5700 | 0,25 | 0,48 | 0,45 | 0,28 | 0,66 | 0,60 | 16200 | 1,38 |
| 9000 | 0,30 | 0,74 | 0,67 | 0,35 | 1,35 | 1,12 | 17800 | 1,37 |

Les résultats portés dans le tableau 4 permettent de tracer les courbes cinétiques qui sont représentées sur les figures suivantes :

Figure 7 : In(1/1-TcBA) = f(t) ;
Figure 8 : In(1/1-TcM) = f(t) ;
Figure 9 : In(1/I-TcG) = f(t) ;
Figure 10 : Mn = f (Tc G) ;
Figure 11 : IP = f (Tc G).

➢ **Exemple 6 :**

On opère comme dans l'exemple 5, excepté que l'on réalise la copolymérisation à 120°C (au lieu de 95°C) et que l'on ajoute 0,0368 g de nitroxyde SG1.

Les résultats sont reportés dans le tableau 5 ci-après.

TABLEAU 5 ~ Résultats de l'exemple 6

| T(s) | Tc BA | Tc M | Tc G | In(1/1-TcBA) | In(1/1-TcM) | In(1/1-TcG) | Mn | Ip |
|---|---|---|---|---|---|---|---|---|
| 900 | 0,11 | 0,18 | 0,17 | 0,12 | 0,20 | 0,24 | 19700 | 1,15 |
| 2100 | 0,05 | 0,27 | 0,24 | 0,05 | 0,32 | 0,35 | 26300 | 1,23 |
| 3300 | 0,17 | 0,31 | 0,29 | 0,19 | 0,37 | 0,43 | 37500 | 1,20 |
| 4500 | 0,13 | 0,33 | 0,30 | 0,14 | 0,41 | 0,60 | 46400 | 1,23 |
| 8100 | 0,15 | 0,48 | 0,43 | 0,16 | 0,65 | 1,12 | 61600 | 1,22 |
| 10200 | 0,26 | 0,62 | 0,56 | 0,31 | 0,97 | 1,12 | 71300 | 1,24 |

Les résultats portés dans le tableau 5 permettent de tracer les courbes cinétiques qui sont représentées sur les figures suivantes :

Figure 12 : In(1/1-TcBA) = f(t) ;
Figure 13 : In(1/1-TcM) = f(t) ;
Figure 14 : In(1/1-TcG) = f(t) ;
Figure 15 : Mn = f (Tc Global) ;
Figure 16 : IP = f (Tc Global).

➢ **Exemples 7 et 8 :**

Utilisation de l'acoxyamine acide méthytpropionique / SG1 comme amorceur dans la polymérisation du méthacrylate de méthyle (MMA).

➢ Mode opératoire :

Dans un ballon bicol en verre de 25 ml, on mélange 10 g de MMA et 198 g d'alcoxyamine acide méthylpropionique / SG1. Le mélange est placé sous atmosphère d'azote en effectuant 3 cycles pression réduite / azote, agité (agitation magnétique) et porté ensuite à une température de polymérisation déterminée.

➢ **Exemple 7 :**

- Température de polymérisation : 25°C
  Les résultats sont reportés dans le tableau 6 ci-après.

Dans ce tableau $T_c$ M signifie taux de conversion du méthacrylate de méthyle.

TABLEAU 6 ~ Résultats de l'exemple 7

| Temps (heure) | Tc M | Mn | Ip |
|---|---|---|---|
| 2 | 0,13 | 11800 | 1,9 |

(suite)

| Temps (heure) | Tc M | Mn | Ip |
|---|---|---|---|
| 4 | 0,14 | 12 900 | 1,8 |
| 21 | 0,16 | 14800 | 1,7 |
| 29 | 0,18 | 17500 | 1,6 |
| 45 | 0,20 | 19600 | 1,5 |
| 69 | 0,22 | 20700 | 1,4 |

➢ **Exemple 8 :**

- Température de polymérisation : 45°C
  Les résultats sont reportés dans le tableau 7 ci-après.

Dans ce tableau $T_c$ M signifie taux de conversion du méthacrylate de méthyle.

TABLEAU 7 ~ Résultats de l'exemple 8

| Temps (minutes) | Tc M |
|---|---|
| 15 | 0,24 |
| 30 | 0,34 |
| 45 | 0,39 |
| 90 | 0,55 |
| 135 | 0,68 |

➢ **Exemple 9 :**

Polymérisation du styrène en présence de l'alcoxyamine acide méthylpropionique /SG1 selon la présente invention.

Dans un tricol, muni d'un réfrigérant et d'un agitateur magnétique, on place 30 g de styrène (0,288 mole) et 1,143 g d'acide méthylpropionique-SG1 (3 mmol). La solution est dégazée par barbotage d'azote pendant 20 minutes. Le mélange réactionnel est chauffé à 123°C. L'évolution de la polymérisation est suivie par RMN de $^1H$ sur des échantillons prélevés toutes les 30 minutes. A la fin de la réaction - la durée de polymérisation est de 5h30 - le polymère est dissout dans le THF puis précipité dans le pentane.

Le polymère est récupéré par filtration de la solution puis séché sur rampe à vide. On obtient 24 g (rendement : 90 %) d'un polymère P1 de structure :

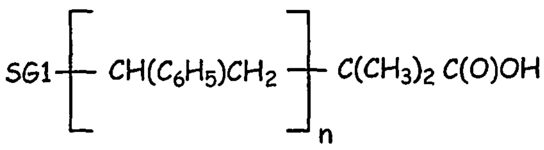

P1

de masse moléculaire $\overline{Mn}$ environ égale à 10 000.

➢ **Exemple 10 :**

Synthèse d'un polymère P2 de structure :

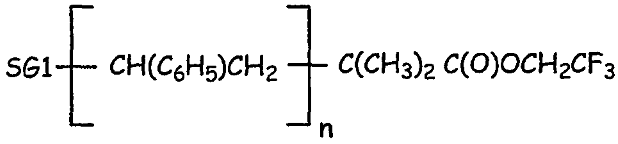 P2

Dans un bicol muni d'un système d'agitation et d'un septum, on introduit 5 g de polymère P1 obtenu précédemment dans l'exemple 9 (0,45 mmol) et du $CH_2Cl_2$. La solution est dégazée par barbotage d'azote pendant 10 minutes.
A l'aide d'une seringue, on introduit 0,34 ml de $SOCl_2$ (4,8 mmol) à travers le septum.
Le mélange est agité à température ambiante sous atmosphère inerte pendant 2 heures.
La solution est ensuite concentrée sur rampe à pression réduite (pression de $10^{-1}$ mbar) pour évaporer le $CH_2Cl_2$ et $SOCl_2$ en excès.
Puis on ajoute dans le bicol placé sous azote du THF, capable de solubiliser le polymère SG1 $[CH(C_6H_5)\text{-}CH_2]_nC(CH_3)C(O)Cl$, suivi d'une solution comprenant 0,13ml de triéthylamine et 0,122 g de 4-diméthylaminopyridine (DMAP) (1 mmol) puis 0,34 ml de $CF_3CH_2OH$ (4,80 mmol) dans du THF.
On note l'apparition immédiate d'un précipité blanc. Le milieu réactionnel est agité environ 2 heures à température ambiante. Le précipité est éliminé par filtration puis le filtrat est évaporé sous pression réduite.
Le polymère P2 obtenu est purifié par solubilisation dans le THF puis reprécipité dans le pentane. Le produit est ensuite filtré et séché sur rampe à pression réduite. On obtient 5,01 g de P2.
Caractéristiques analytiques :
RMN $^{19}F$ ($CDCl_3$, 282,4 MHz) : $\delta$ = 74,02 ppm
RMN $^{31}P$ ($CDCl_3$, 121,49 MHz) :
$\delta$ = 25,61 ppm (singulet) (1 dia. 67 %)
$\delta$ = 24,43 ppm (singulet) (1 dia. 33 %)

➢ **Exemple 11** :

Synthèse d'un polymère P3 de structure :

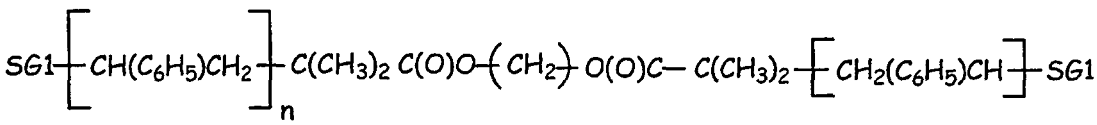 P3

On opère comme dans l'exemple 1/ précédent, excepté que l'on utilise 0,5 équivalent d'éthanediol au lieu de 4,80 mmol de $CF_3CH_2OH$ et que dans la première étape (formation du chlorure d'acide), le milieu réactionnel est porté 2h à 40°C et que dans l'étape suivante [étape du couplage] le milieu réactionnel est porté 16h à température ambiante.
Le taux de couplage déterminé par GPC est de 47°C.

➢ **Exemple 12 :**

Synthèse d'un polymère P4 de structure :

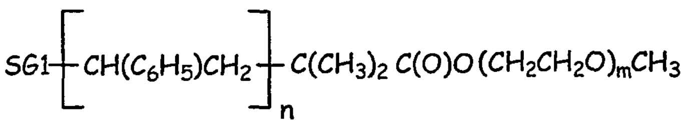 P4

par couplage entre le polymère P1 et un bloc POE-OMe $(\overline{Mn} = 750\ g\ .\ mol^{-1})$

➢ Mode opératoire :

Dans un bicol muni d'un système d'agitation et d'un septum, on place P1 dissout dans du THF. La solution est

dégagée par barbotage d'azote pendant 10 minutes. A l'aide d'une seringue, on introduit le chlorure de thionyle (10 équivalents) à travers le septum. Le mélange est agité sous atmosphère inerte pendant 4 heures à 40°C. La solution est ensuite concentrée sur rampe à pression réduite pour évaporer le solvant et le chlorure de thionyle en excès.

Puis on ajoute dans le bicol placé sous azote, une solution de triéthylamine (1 équivalent), de 4-diméthylaminopyridine (DMAP) (catalytique) et du bloc POE-OMe (3 équivalents dans le DMF. Le mélange est agité pendant 17 heures à 80°C.

P4 et P1 sont séparés du POE-OMe en excès par précipitation sélective dans l'éthanol, filtrés puis séchés sur rampe à vide. Le taux de couplage déterminé par RMN proton est de 7 %.

➢ **<u>Exemple 13 :</u>**

Synthèse du polymère P4 en utilisant la dicyclohexylcarbodiimide (DCC) au lieu de la triéthylamine sans passer par l'étape chlorure d'acide.

➢ <u>Mode opératoire</u> :

Dans un ballon muni d'un agitateur magnétique et d'un réfrigérant, on place P1 (1 équivalent), le poly(oxyde d'éthylène)-α-méthoxylé (1 équivalent) et la 4-diméthylaminopyridine (DMAP) (0,8 équivalent) dans du dichlorométhane anhydre. La solution est dégazée par barbotage d'azote pendant 10 à 15 minutes. La dicyclohexylcarbodiimide (DCC) (2,6 équivalents), dissout dans le minimum de $CH_2Cl_2$, est ajouté au mélange à l'aide d'une seringue.

Le mélange est laissé sous agitation à la température ambiante pendant 24 heures.

Ensuite, P4 et P1 sont séparés du POE-OMe en excès par précipitation sélective dans l'éthanol, filtrés puis séchés sur rampe à vide. Le taux de couplage déterminé par RMN proton est de 38 %.

## Revendications

1. Alcoxyamines de formule:

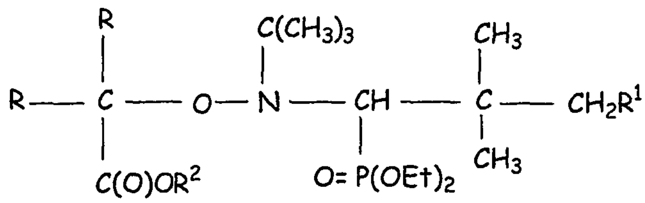

(I)

dans laquelle R représente un radical alkyle, linéaire ou ramifié, ayant un nombre d'atomes de carbone allant de 1 à 3, $R^1$ représente un atome d'hydrogène ou un reste :

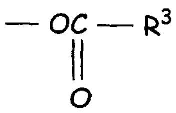

dans lequel $R^3$ représente un radical alkyle linéaire ou ramifié, ayant un nombre d'atomes de carbone allant de 1 à 20, $R^2$ représente un atome d'hydrogène, un radical alkyle, linéaire ou ramifié, ayant un nombre d'atomes de carbone allant de 1 à 8, un radical phényle, un métal alcalin tel que Li, Na, K ; $H_4N^+$, $Bu_4N^+$, $Bu_3HN^+$, à l'exclusion des alcoxyamines de formule (I) dans la formule desquelles $R^1$=H et $R^2$ représente un radical alkyl, linéaire ou ramifié, ayant un nombre d'atomes de carbone allant de 1 à 6.

2. L'acide 2-méthyl-2-[N-tertiobutyl-N-(diéthoxyphosphoryl-2,2-diméthylpropyl)-aminoxy] propionique :

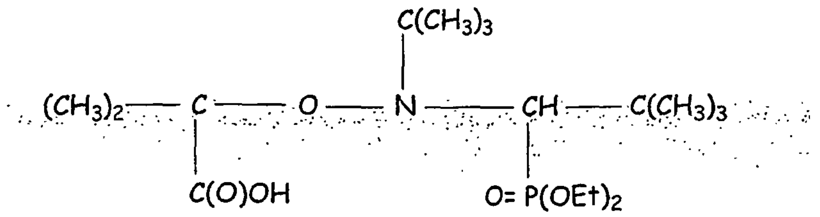

3. Le 2-méthyl-2-[N-tertiobutyl-N-(diéthoxyphosphoryl-2,2-diméthylpropyl)aminoxy] propionate de sodium :

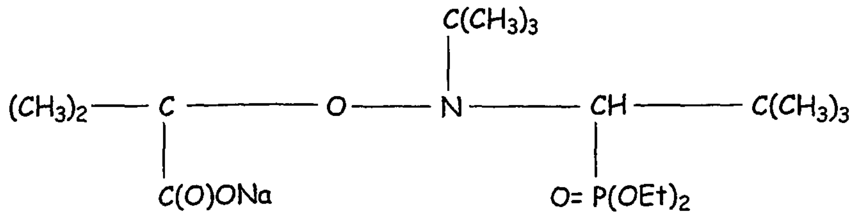

4. Utilisation comme amorceurs des (co)polymérisations d'au moins un monomère polymérisable par voie radicalaire en masse, en solution, en émulsion, en suspension, en miniémulsion, des alcoxyamines de formule :

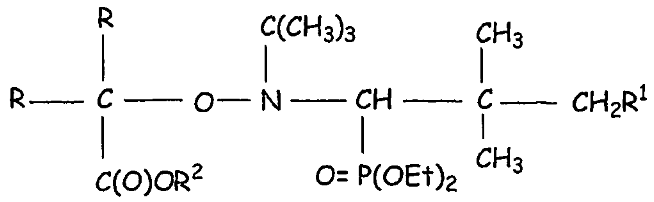

(I)

dans laquelle R représente un radical alkyle, linéaire ou ramifié, ayant un nombre d'atomes de carbone allant de 1 à 3, $R^1$ représente un atome d'hydrogène ou un reste :

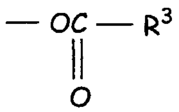

dans lequel $R^3$ représente un radical alkyle linéaire ou ramifié, ayant un nombre d'atomes de carbone allant de 1 à 20 ; $R^2$ représente un atome d'hydrogène, un radical alkyle, linéaire ou ramifié, ayant un nombre d'atomes de carbone allant de 1 à 8, un radical phényle, un métal alcalin tel que Li, Na, K ; $H_4N^+$, $Bu_4N^+$, $Bu_3HN^+$ et présentant une constante cinétique de dissociation kd, mesurée à 120°C par RPE, supérieure à 0,05 $s^{-1}$ et, de préférence supérieure à 0,1 $s^{-1}$.

5. Utilisation selon la revendication 4 des alcoxyamines de formule (I) dans laquelle R=$CH_{3-}$, $R^1$=H et $R^2$=H, $CH_{3-}$, $(CH_3)_{3-}$, Li et Na.

6. Utilisation selon l'une des revendications 4 ou 5 de l'acide 2-méthyl-2-[N-tertiobutyl-N-(diéthoxyphosphoryl-2,2-diméthylpropyl)-aminoxy] propionique :

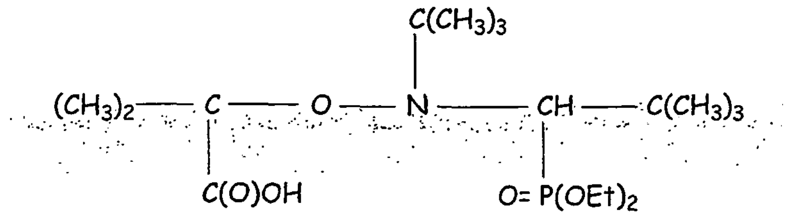

7. Utilisation selon l'une des revendications 4 ou 5 du 2-méthyl-2-[N-tertiobutyl-N-(diéthoxyphosphoryl-2,2-diméthylpropyl)aminoxy] propionate de méthyle :

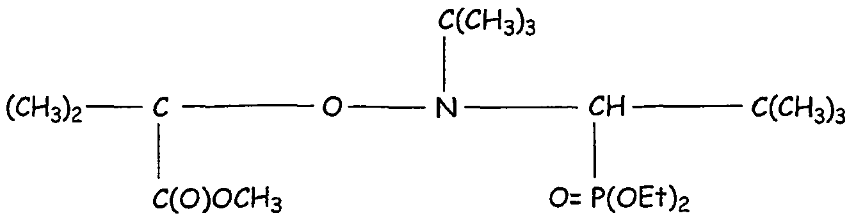

8. Utilisation selon l'une des revendications 4 à 9, **caractérisée en ce que** le ou les monomères polymérisables par voie radicalaire sont choisis parmi les monomères vinylaromatiques tels que le styrène, l'α-méthylstyrène le styrène sulfonate de sodium, les diènes tels que le butadiène, l'isoprène, les monomères (méth)acryliques, (méth)acrylates tels que l'acide acrylique ou ses sels, l'acrylate de méthyle, l'acrylate d'éthyle, l'acrylate de butyle, l'acrylate d'éthylhexyle, l'acrylate de phényle, l'acrylate de 2-hydroxyéthyle, l'acrylate de 2-méthoxyéthyle, les acrylates de méthoxypolyéthylèneglycol, les acrylates d'éthoxypolyéthylèneglycol, les acrylates de méthoxypolypropylèneglycol, les acrylates de méthoxy-polyethylèneglycol-polypropylèneglycol ou leurs mélanges, l'acrylate de 2-(diméthylamino) éthyle (ADAME), le chlorure ou le sulfate de [2-(acryloyloxy)éthyl]triméthylammonium, le chlorure ou le sulfate de [2-(acryloyloxy)éthyl]diméthylbenzylammonium, l'acide méthacrylique ou ses sels, le méthacrylate de méthyle, le méthacrylate de lauryle, le méthacrylate de cyclohexyle , le méthacrylate d'allyle, le méthacrylate de phényle, le méthacrylate de 2-hydroxyéthyle, le méthacrylate de 2-hydroxypropyle, le méthacrylate de 2-éthoxyéthyle, les méthacrylates de méthoxypolyéthylèneglycol, les méthacrylates d'éthoxypolyéthylèneglycol, les méthacrylates de méthoxypolypropylèneglycol, les méthacrylates de méthoxy-polyethylèneglycol-polypropylèneglycol ou leurs mélanges, le méthacrylate de 2-(diméthylamino)éthyle (MADAME), le chlorure ou le sulfate de [2-(méthacryloyloxy)éthyl] triméthylammonium, le chlorure ou le sulfate de [2-(méthacryloyloxy)éthyl]diméthylbenzylammonium, le méthacrylate de 2,2,2-trifluoroéthyle, le 3-méthacryloylpropyltriméthylsilane, le méthacrylate de phosphate d'éthylèneglycol, le méthacrylate d'hydroxyéthylimidazolidone, le méthacrylate d'hydroxyéthylimidazolidinone, le méthacrylate de 2-(2-oxo-1-imidazolidinyl)éthyle, l'acrylonitrile, les (méth)acrylamides éventuellement substitués tels que l'acrylamide, la 4-acryloylmorpholine, le N-méthylolacrylamide, le chlorure d'acrylamidopropyltriméthylammonium (APTAC), l'acide acrylamidométhylpropane-sulfonique (AMPS) ou ses sels, le méthacrylamide, le N-méthylolméthacrylamide, le chlorure de méthacrylamidopropyltriméthyl ammonium (MAPTAC), l'acide itaconique, l'acide maléique ou ses sels, l'anhydride maléique, la vinylpyridine, la vinylpyrrolidinone, les (alkoxy) poly(alkylène glycol) vinyl éther ou divinyl éther, tels que le méthoxy poly(éthylène glycol) vinyl éther, le poly(éthylène glycol) divinyl éther ou un mélange d'au moins deux monomères précités.

9. Utilisation selon la revendication 8, **caractérisée en ce qu'**au moins un des monomères est l'acrylate de butyle.

10. Utilisation selon la revendication 8 ou 9, **caractérisée en ce qu'**au moins un des monomères est le méthacrylate de méthyle.

11. Utilisation selon la revendication 8, **caractérisée en ce que** le mélange de monomères est constitué d'acrylate de butyle et de méthacrylate de méthyle.

12. (Co)polymères obtenus par (co)polymérisation d'au moins un monomère polymérisable par voie radicalaire en masse, en solution, en émulsion, en suspension, en miniémulsion, en présence d'une alcoxyamine de formule :

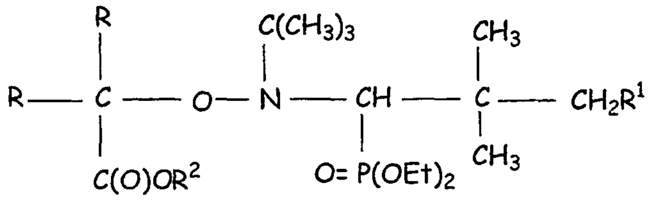

(I)

dans laquelle R représente un radical alkyle, linéaire ou ramifié, ayant un nombre d'atomes de carbone allant de 1 à 3, $R^1$ représente un atome d' hydrogène ou un reste :

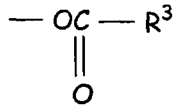

dans lequel $R^3$ représente un radical alkyle linéaire ou ramifié, ayant un nombre d'atomes de carbone allant de 1 à 20 ; $R^2$ représente un atome d'hydrogène, un radical alkyle, linéaire ou ramifié, ayant un nombre d'atomes de carbone allant de 1 à 8, un radical phényle, un métal alcalin tel que Li, Na, K ; $H_4N^+$, $Bu_4N^+$, $Bu_3HN^+$ et présentant une constante cinétique de dissociation kd, mesurée à 120°C par RPE, supérieure à 0,05 $s^{-1}$ et, de préférence supérieure à 0,1 $s^{-1}$.

13. (Co)polymères selon la revendication 12, **caractérisés en ce que** le ou les monomères polymérisables par voie radicalaire sont choisis parmi les monomères vinylaromatiques tels que le styrène, l'α-méthylstyrène le styrène sulfonate de sodium, les diènes tels que le butadiène, l'isoprène, les monomères (méth)acryliques, (méth)acrylates tels que l'acide acrylique ou ses sels, l'acrylate de méthyle, l'acrylate d'éthyle, l'acrylate de butyle, l'acrylate d'éthylhexyle, l'acrylate de phényle, l'acrylate de 2-hydroxyéthyle, l'acrylate de 2-méthoxyéthyle, les acrylates de méthoxypolyéthylèneglycol, les acrylates d'éthoxypolyéthylèneglycol, les acrylates de méthoxypolypropylèneglycol, les acrylates de méthoxy-polyethylèneglycol-polypropylèneglycol ou leurs mélanges, l'acrylate de 2-(diméthylamino) éthyle (ADAME), le chlorure ou le sulfate de [2-(acryloyloxy)éthyl]triméthylammoniurn, le chlorure ou le sulfate de [2-(acryloyioxy)éthyl]diméthylbenzylammonium, l'acide méthacrylique ou ses sels, le méthacrylate de méthyle, le méthacrylate de lauryle, le méthacrylate de cyclohexyle , le méthacrylate d'allyle, le méthacrylate de phényle, le méthacrylate de 2-hydroxyéthyle, le méthacrylate de 2-hydroxypropyle, le méthacrylate de 2-éthoxyéthyle, les méthacrylates de méthoxypolyéthylèneglycol, les méthacrylates d'éthoxypolyéthylèneglycol, les méthacrylates de méthoxypolypropylèneglycol, les méthacrylates de méthoxy-polyethylèneglycol-polypropylèneglycol ou leurs mélanges, le méthacrylate de 2-(diméthylamino)éthyle (MADAME), le chlorure ou le sulfate de [2-(méthacryloyioxy)éthyl] triméthylammonium, le chlorure ou le sulfate de [2-(méthacryloyioxy)éthyl]diméthylbenzylammonium, le méthacrylate de 2,2,2-trifluoroéthyle, le 3-méthacryloylpropyltriméthylsilane, le méthacrylate de phosphate d'éthylèneglycol, le méthacrylate d'hydroxyéthylimidazolidone, le méthacrylate d'hydroxyéthylimidazolidinone, le méthacrylate de 2-(2-oxo-1-imidazolidinyl)éthyle, l'acrylonitrile, les (méth)acrylamides éventuellement substitués tels que l'acrylamide, la 4-acryloylmorpholine, le N-méthylolacrylamide, le chlorure d'acrylamidopropyltriméthylammonium (APTAC), l'acide acrylamidométhylpropane-sulfonique (AMPS) ou ses sels, le méthacrylamide, le N-méthylolméthacrylamide, le chlorure de méthacrylamidopropyltriméthyl ammonium (MAPTAC), l'acide itaconique, l'acide maléique ou ses sels, l'anhydride maléique, la vinylpyridine, la vinylpyrrolidinone ou un mélange d'au moins deux monomères précités.

14. Polymères selon la revendication 13, **caractérisés en ce qu'**au moins un des monomères est l'acrylate de butyle.

15. Polymères selon la revendication 13 ou 14, **caractérisés en ce qu'**au moins un des monomères est l'acrylate de méthyle.

16. Copolymères selon la revendication 13, **caractérisés en ce que** le mélange de monomères est constitué d'acrylate de butyle et de méthacrylate de méthyle.

**17.** Utilisation des (co)polymères selon l'une des revendications 12 à 16 pour réaliser des transformations chimiques.

**18.** Utilisation selon la revendication 17 d'un polymère P1 de structure :

$$SG1-\left[CH(C_6H_5)CH_2\right]_n-C(CH_3)_2\,C(O)OH \qquad P1$$

structure :pour obtenir un polymère P2 de

$$SG1-\left[CH(C_6H_5)CH_2\right]_n-C(CH_3)_2\,C(O)OCH_2CF_3 \qquad P2$$

**19.** Utilisation selon la revendication 17 d'un polymère P1 de structure :

$$SG1-\left[CH(C_6H_5)CH_2\right]_n-C(CH_3)_2\,C(O)OH \qquad P1$$

pour obtenir un polymère P3 de structure :

$$SG1-\left[CH(C_6H_5)CH_2\right]_n-C(CH_3)_2\,C(O)O\left(CH_2\right)_2O(O)C-C(CH_3)_2-\left[CH_2(C_6H_5)CH\right]_n-SG1 \qquad P3$$

**20.** Utilisation selon la revendication 17 d'un polymère P1 de structure :

$$SG1-\left[CH(C_6H_5)CH_2\right]_n-C(CH_3)_2\,C(O)OH \qquad P1$$

pour obtenir un polymère P4 de structure :

$$SG1-\left[CH(C_6H_5)CH_2\right]_n-C(CH_3)_2\,C(O)O(CH_2CH_2O)_mCH_3 \qquad P4$$

## Claims

**1.** Alkoxyamines of formula:

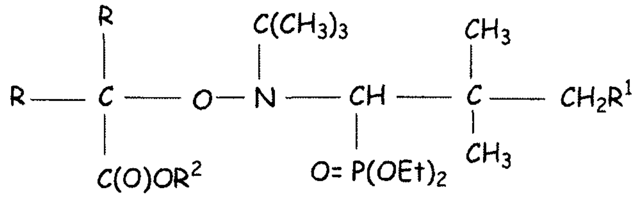

(I)

in which R represents a linear or branched alkyl radical having a number of carbon atoms ranging from 1 to 3, $R^1$ represents a hydrogen atom or a residue:

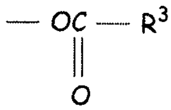

in which $R^3$ represents a linear or branched alkyl radical having a number of carbon atoms ranging from 1 to 20, and $R^2$ represents a hydrogen atom, a linear or branched alkyl radical having a number of carbon atoms ranging from 1 to 8, a phenyl radical, an alkali metal, such as Li, Na or K, $H_4N^+$, $Bu_4N^+$ or $Bu_3HN^+$, with the exception of the alkoxyamines of formula (I) in the formula of which $R^1$ = H and $R^2$ represents a linear or branched alkyl radical having a number of carbon atoms ranging from 1 to 6.

**2.** 2-Methyl-2-[N-(tert-butyl)-N-(diethoxyphosphoryl-2,2-dimethylpropyl)aminoxy]propionic acid:

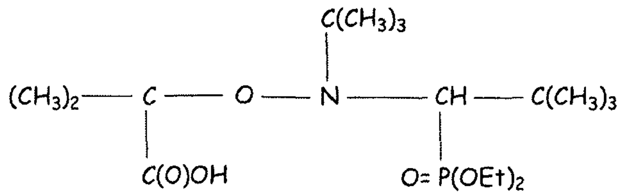

**3.** Sodium 2-methyl-2-[N-(tert-butyl)-N-(diethoxyphosphoryl-2,2-dimethylpropyl)aminoxy]propionate:

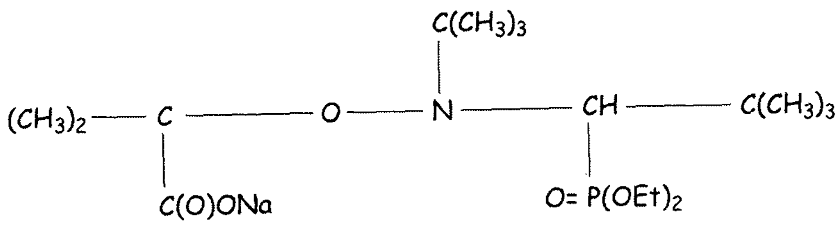

**4.** Use as initiators for (co)polymerizations of at least one monomer which can be polymerized by the radical route under bulk, solution, emulsion, suspension or miniemulsion conditions of the alkoxyamines of formula:

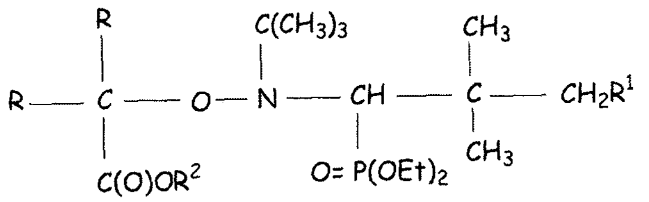

(I)

in which R represents a linear or branched alkyl radical having a number of carbon atoms ranging from 1 to 3, $R^1$ represents a hydrogen atom or a residue:

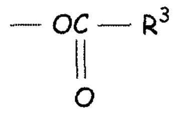

in which $R^3$ represents a linear or branched alkyl radical having a number of carbon atoms ranging from 1 to 20, and $R^2$ represents a hydrogen atom, a linear or branched alkyl radical having a number of carbon atoms ranging from 1 to 8, a phenyl radical, an alkali metal, such as Li, Na or K, $H_4N^+$, $Bu_4N^+$ or $Bu_3HN^+$, exhibiting a kinetic dissociation constant kd, measured at 120°C by EPR, of greater than 0.05 $s^{-1}$ and preferably of greater than 0.1 $s^{-1}$.

5. Use according to Claim 4 of the alkoxyamines of formula (I) in which R = $CH_3$-, $R^1$ = H and $R^2$ = H, $CH_3$, $(CH_3)_3C$, Li and Na.

6. Use according to either of Claims 4 and 5 of 2-methyl-2-[N-(tert-butyl)-N-(diethoxyphosphoryl-2,2-dimethylpropyl) aminoxyjpropionic acid:

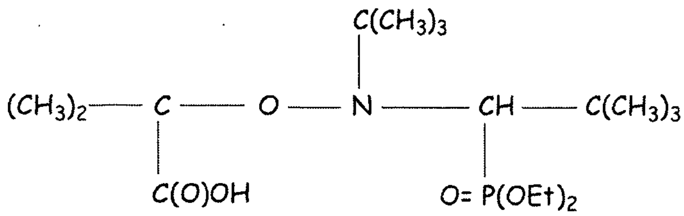

7. Use according to either of Claims 4 and 5 of methyl 2-methyl-2-[N-(tert-butyl)-N-(diethoxyphosphoryl-2,2-dimethylpropyl)aminoxy]propionate:

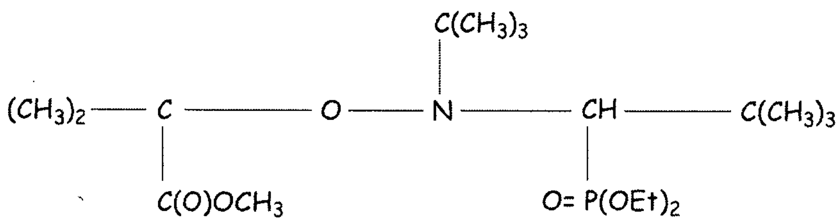

8. Use according to one of Claims 4 to 9, **characterized in that** the monomer or monomers which can be polymerized by the radical route are chosen from vinylaromatic monomers, such as styrene, α-methylstyrene or sodium styrenesulphonate, dienes, such as butadiene or isoprene, (meth)acrylic or (meth)acrylate monomers, such as acrylic acid or its salts, methyl acrylate, ethyl acrylate, butyl acrylate, ethylhexyl acrylate, phenyl acrylate, 2-hydroxyethyl acrylate, 2-methoxyethyl acrylate, methoxypolyethylene glycol acrylates, ethoxypolyethylene glycol acrylates, methoxypolypropylene glycol acrylates, methoxypolyethylene glycol-polypropylene glycol acrylates or their mixtures, 2-(dimethylamino)ethyl acrylate (ADAME), [2-(acryloyloxy)ethyl]trimethylammonium chloride or sulphate, [2-(acryloyloxy)ethyl]dimethylbenzylammonium chloride or sulphate, methacrylic acid or its salts, methyl methacrylate, lauryl methacrylate, cyclohexyl methacrylate, allyl methacrylate, phenyl methacrylate, 2-hydroxyethyl methacrylate, 2-hydroxypropyl methacrylate, 2-ethoxyethyl methacrylate, methoxypolyethylene glycol methacrylates, ethoxypolyethylene glycol methacrylates, methoxypolypropylene glycol methacrylates, methoxypolyethylene glycol-polypropylene glycol methacrylates or their mixtures, 2-(dimethylamino)ethyl methacrylate (MADAME), [2-(methacryloyloxy) ethyl]trimethylammonium chloride or sulphate, [2-(methacryloyloxy)ethyl]dimethylbenzylammonium chloride or sulphate, 2,2,2-trifluoroethyl methacrylate, 3-methacryloyloxypropyltrimethylsilane, ethylene glycol methacrylate phosphate, hydroxyethylimidazolidone methacrylate, hydroxyethylimidazolidinone methacrylate, 2-(2-oxo-1-imidazolidinyl)ethyl methacrylate, acrylonitrile, optionally substituted (meth)acrylamides, such as acrylamide, 4-acryoylmorpholine, N-methylolacrylamide, acrylamidopropyltrimethylammonium chloride (APTAC), acrylamidomethylpropanesulphonic acid (AMPS) or is salts, methacrylamide, N-methylolmethacrylamide or methacrylamidopropyltrimethylammonium chloride (MAPTAC), itaconic acid, maleic acid or its salts, maleic anhydride, vinylpyridine, vinylpyrrolidinone, (alkoxy)poly(alkylene glycol) vinyl ethers or divinyl ethers, such as methoxypoly(ethylene glycol) vinyl ether or poly(ethylene glycol) divinyl ether, or a mixture of at least two abovementioned monomers.

**9.** Use according to Claim 8, **characterized in that** at least one of the monomers is butyl acrylate.

**10.** Use according to Claim 8 or 9, **characterized in that** at least one of the monomers is methyl methacrylate.

**11.** Use according to Claim 8, **characterized in that** the mixture of monomers is composed of butyl acrylate and of methyl methacrylate.

**12.** (Co)polymers obtained by (co)polymerization of at least one monomer which can be polymerized by the radical route under bulk, solution, emulsion, suspension or miniemulsion conditions in the presence of an alkoxyamine of formula:

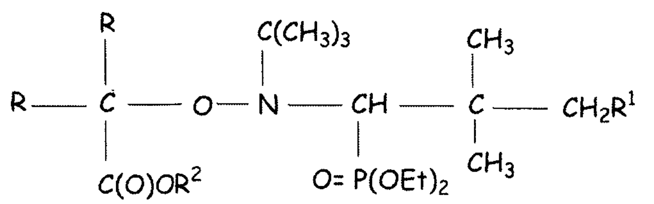

(I)

in which R represents a linear or branched alkyl radical having a number of carbon atoms ranging from 1 to 3, $R^1$ represents a hydrogen atom or a residue:

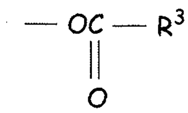

in which $R^3$ represents a linear or branched alkyl radical having a number of carbon atoms ranging from 1 to 20, and $R^2$ represents a hydrogen atom, a linear or branched alkyl radical having a number of carbon atoms ranging from 1 to 8, a phenyl radical, an alkali metal, such as Li, Na or K, $H_4N^+$, $Bu_4N^+$ or $Bu_3HN^+$, exhibiting a kinetic dissociation constant kd, measured at 120°C by EPR, of greater than 0.05 $s^{-1}$ and preferably of greater than 0.1 $s^{-1}$.

**13.** (Co)polymers according to Claim 12, **characterized in that** the monomer or monomers which can be polymerized by the radical route are chosen from vinylaromatic monomers, such as styrene, α-methylstyrene or sodium styrenesulphonate, dienes, such as butadiene or isoprene, (meth)acrylic or (meth)acrylate monomers, such as acrylic acid or its salts, methyl acrylate, ethyl acrylate, butyl acrylate, ethylhexyl acrylate, phenyl acrylate, 2-hydroxyethyl acrylate, 2-methoxyethyl acrylate, methoxypolyethylene glycol acrylates, ethoxypolyethylene glycol acrylates, methoxypolypropylene glycol acrylates, methoxypolyethylene glycol-polypropylene glycol acrylates or their mixtures, 2-(dimethylamino)ethyl acrylate (ADAME), [2-(acryloyloxy)ethyl]trimethylammonium chloride or sulphate, [2-(acryloyloxy)ethyl]dimethylbenzylammonium chloride or sulphate, methacrylic acid or its salts, methyl methacrylate, lauryl methacrylate, cyclohexyl methacrylate, allyl methacrylate, phenyl methacrylate, 2-hydroxyethyl methacrylate, 2-hydroxypropyl methacrylate, 2-ethoxyethyl methacrylate, methoxypolyethylene glycol methacrylates, ethoxypolyethylene glycol methacrylates, methoxypolypropylene glycol methacrylates, methoxypolyethylene glycol-polypropylene glycol methacrylates or their mixtures, 2-(dimethylamino)ethyl methacrylate (MADAME), [2-(methacryloyloxy) ethyl]trimethylammonium chloride or sulphate, [2-(methacryloyloxy)ethyl]dimethylbenzylammonium chloride or sulphate, 2,2,2-trifluoroethyl methacrylate, 3-methacryloyloxypropyltrimethylsilane, ethylene glycol methacrylate phosphate, hydroxyethylimidazolidone methacrylate, hydroxyethylimidazolidinone methacrylate, 2-(2-oxo-1-imidazolidinyl)ethyl methacrylate, acrylonitrile, optionally substituted (meth)acrylamides, such as acrylamide, 4-acryoylmorpholine, N-methylolacrylamide, acrylamidopropyltrimethylammonium chloride (APTAC), acrylamidomethylpropanesulphonic acid (AMPS) or is salts, methacrylamide, N-methylolmethacrylamide or methacrylamidopropyltrimethylammonium chloride (MAPTAC), itaconic acid, maleic acid or its salts, maleic anhydride, vinylpyridine, vinylpyrrolidinone or a mixture of at least two abovementioned monomers.

**14.** Polymers according to Claim 13, **characterized in that** at least one of the monomers is butyl acrylate.

**15.** Polymers according to Claim 13 or 14, **characterized in that** at least one of the monomers is methyl acrylate.

**16.** Copolymers according to Claim 13, **characterized in that** the mixture of monomers is composed of butyl acrylate and of methyl methacrylate.

**17.** Use of the (co)polymers according to one of Claims 12 to 16 for carrying out chemical conversions.

**18.** Use according to Claim 17 of a polymer P1 with the structure:

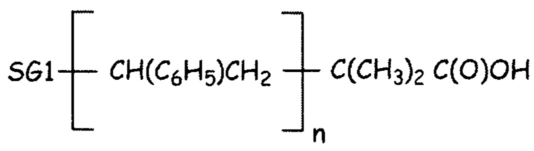

P1

to obtain a polymer P2 with the structure:

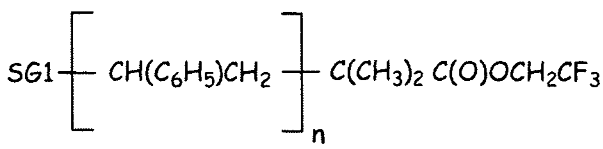

P2

**19.** Use according to Claim 17 of a polymer P1 with the structure:

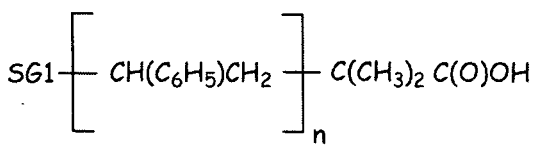

P1

to obtain a polymer P3 with the structure:

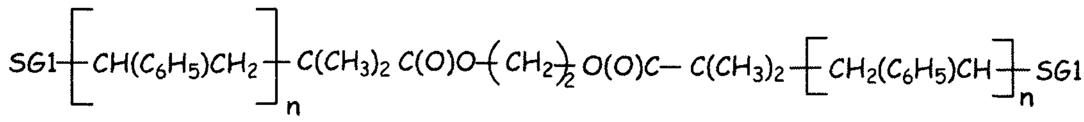 P3

**20.** Use according to Claim 17 of a polymer P1 with the structure:

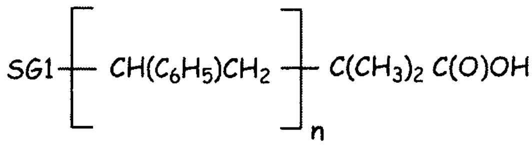 P1

to obtain a polymer P4 with the structure:

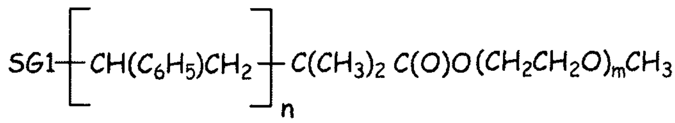 P4

## Patentansprüche

**1.** Alkoxyamine der Formel:

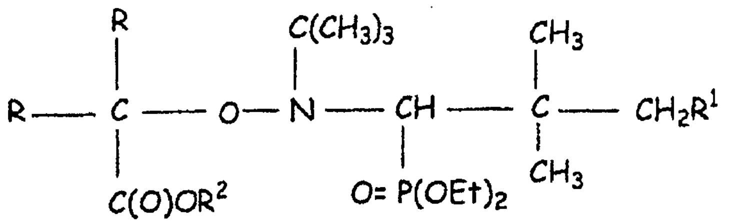 (I)

worin R für einen linearen oder verzweigten Alkylrest mit 1 bis 3 Kohlenstoffatomen steht, $R^1$ für ein Wasserstoffatom oder einen Rest:

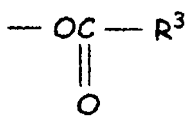

worin $R^3$ einen linearen oder verzweigten Alkylrest mit 1 bis 20 Kohlenstoffatomen bedeutet, steht, $R^2$ für ein Wasserstoffatom, einen linearen oder verzweigten Alkylrest mit 1 bis 8 Kohlenstoffatomen, einen Phenylrest, ein Alkalimetall wie Li, Na, K; $H_4N^+$, $Bu_4N^+$ oder $Bu_3HN^+$ steht, ausgenommen die Alkoxyamine der Formel (I), worin $R^1$ = H und $R^2$ für einen linearen oder verzweigten Alkylrest mit 1 bis 6 Kohlenstoffatomen steht.

2. 2-Methyl-2-[N-tert.-butyl-N-(diethoxyphosphoryl-2,2-dimethylpropyl)aminoxy]propionsäure:

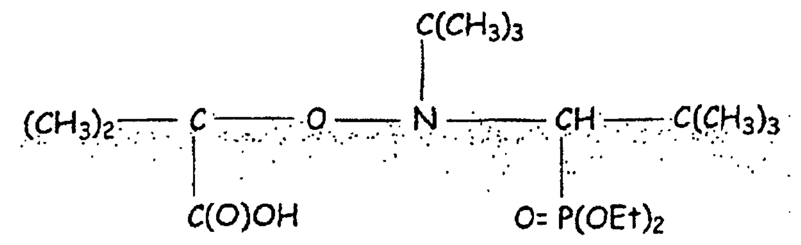

3. Natrium-2-methyl-2-[N-tert.-butyl)N-(diethoxyphosphoryl-2,2-dimethylpropyl)aminoxy]propionat:

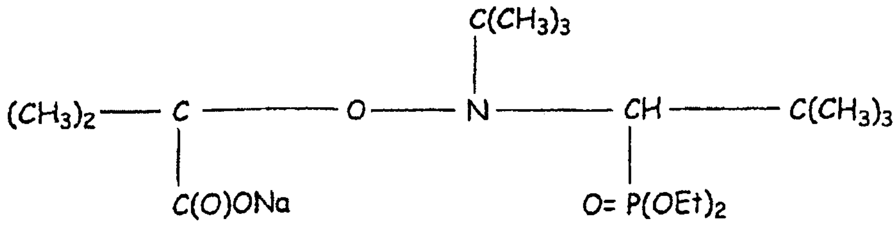

4. Verwendung von Alkoxyaminen der Formel (I)

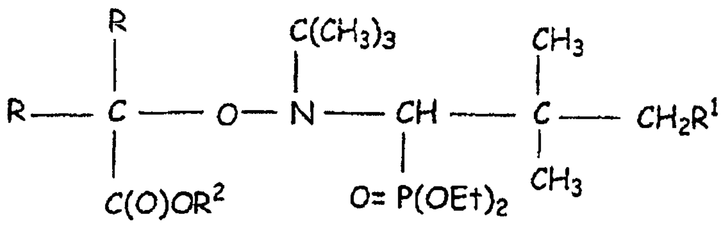

(I)

worin R für einen linearen oder verzweigten Alkylrest mit 1 bis 3 Kohlenstoffatomen steht, $R^1$ für ein Wasserstoffatom oder einen Rest:

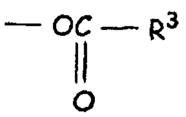

worin $R^3$ einen linearen oder verzweigten Alkylrest mit 1 bis 20 Kohlenstoffatomen bedeutet, steht, $R^2$ für ein Wasserstoffatom, einen linearen oder verzweigten Alkylrest mit 1 bis 8 Kohlenstoffatomen, einen Phenylrest, ein Alkalimetall wie Li, Na, K; $H_4N^+$, $Bu_4N^+$ oder $Bu_3HN^+$ steht, mit einer bei 120°C mittels EPR bestimmten kinetischen Dissoziationskonstante kd von mehr als 0,05 $s^{-1}$ und vorzugsweise mehr als 0,1 $s^{-1}$, als Initiatoren für (Co)polymerisationen von mindestens einem radikalisch polymerisierbaren Monomer in Substanz, Lösung, Emulsion, Suspension oder Miniemulsion.

5. Verwendung nach Anspruch 4 von Alkoxyaminen der Formel (I) , worin R = $CH_3$-, $R^1$ = H und $R^2$ = H, $CH_3$-, $(CH_3)_3C$-, Li und Na.

6. Verwendung nach Anspruch 4 oder 5 von 2-Methyl-2-[N-tert.-butyl-N-(diethoxyphosphoryl-2,2-dimethylpropyl)aminoxy]propionsäure:

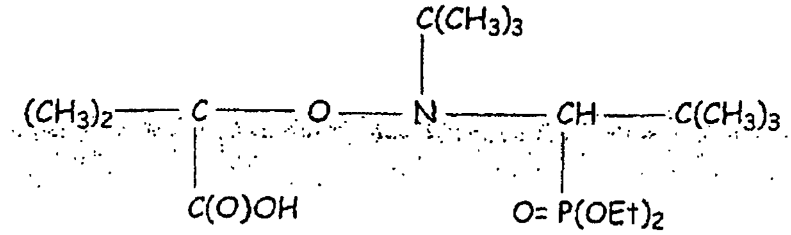

7. Verwendung nach Anspruch 4 oder 5 von 2-Methyl-2-[N-tert.-butyl-N-(diethoxyphosphoryl-2,2-dimethylpropyl)aminoxy]propionsäuremethylester:

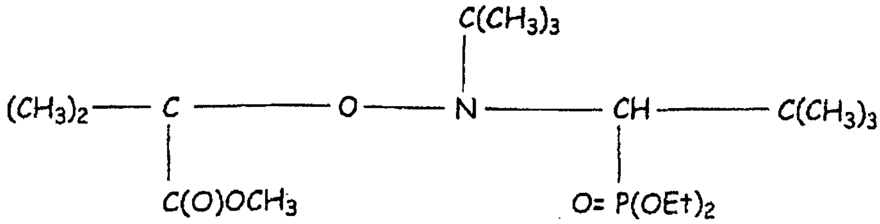

8. Verwendung nach einem der Ansprüche 4 bis 7, **dadurch gekennzeichnet, daß** das oder die radikalisch polymerisierbaren Monomere ausgewählt sind unter vinylaromatischen Monomeren wie Styrol, α-Methylstyrol oder Natriumstyrolsulfonat, Dienen wie Butadien oder Isopren, (Meth)acrylsäure- oder (Meth)acrylat-Monomeren, wie Acrylsäure oder Salzen davon, Methylacrylat, Ethylacrylat, Butylacrylat, Ethylhexylacrylat, Phenylacrylat, 2-Hydroxyethylacrylat, 2-Methoxyethylacrylat, Methoxypolyethylenglykolacrylaten, Ethoxypolyethylenglykolacrylaten, Methoxypolypropylenglykolacrylaten, Methoxypolyethylenglykolpolypropylenglykolacrylaten oder Mischungen davon, 2-(Dimethylamino)ethylacrylat (ADAME), [2-(Acryloyloxy)ethyl]trimethylammoniumchlorid oder -sulfat, [2-(Acryloyloxy)ethyl]dimethylbenzylammoniumchlorid oder -sulfat, Methacrylsäure oder Salzen davon, Methylmethacrylat, Laurylmethacrylat, Cyclohexylmethacrylat, Allylmethacrylat, Phenylmethacrylat, 2-Hydroxyethylmethacrylat, 2-Hydroxypropylmethacrylat, 2-Ethoxyethylmethacrylat, Methoxypolyethylenglykolmethacrylaten, Ethoxypolyethylenglykolmethacrylaten, Methoxypolypropylenglykolmethacrylaten, Methoxypolyethylenglykolpolypropylenglykolmethacrylaten oder Mischungen davon, 2-(Dimethylamino)ethylmethacrylat (MADAME), [2-(Methacryloyloxy)ethyl]trimethylammoniumchlorid oder -sulfat, [2-(Methacryloyloxy)ethyl]dimethylbenzylammoniumchlorid oder -sulfat, 2,2,2-Trifluorethylmethacrylat, 3-Methacryloyloxypropyltrimethylsilan, Ethylenglykolmethacrylatphosphat, Hydroxyethylimidazolidonmethacrylat, Hydroxyethylimidazolidinonmethacrylat, 2-(2-Oxo-1-imidazolidinyl)ethylmethacrylat, Acrylnitril, gegebenenfalls substituierten (Meth)acrylamiden wie Acrylamid, 4-Acryloylmorpholin, N-Methylolacrylamid, Acrylamidopropyltrimethylammoniumchlorid (APTAC), Acrylamidomethylpropansulfonsäure (AMPS) oder Salzen davon, Methacrylamid, N-Methylolmethacrylamid oder Methacrylamidopropyltrimethylammoniumchlorid (MAPTAC), Itaconsäure, Maleinsäure oder Salzen davon, Maleinsäureanhydrid, Vinylpyridin, Vinylpyrrolidinon, (Alkoxy)poly(alkylenglykol)vinylethern oder -divinylethern wie Methoxypoly(ethylenglykol)-vinylether oder Poly(ethylenglykol)divinylether oder einer Mischung von mindestens zwei der oben aufgeführten Monomere.

9. Verwendung nach Anspruch 8, **dadurch gekennzeichnet, daß** es sich bei mindestens einem der Monomere um Butylacrylat handelt.

10. Verwendung nach Anspruch 8 oder 9, **dadurch gekennzeichnet, daß** es sich bei mindestens einem der Monomere um Methylmethacrylat handelt.

11. Verwendung nach Anspruch 8, **dadurch gekennzeichnet, daß** die Monomerenmischung aus Butylacrylat und Methylmethacrylat besteht.

**12.** (Co)polymere, erhalten durch (Co)polymerisation von mindestens einem radikalisch polymerisierbaren Monomer in Substanz, Lösung, Emulsion, Suspension oder Miniemulsion in Gegenwart eines Alkoxyamins der Formel:

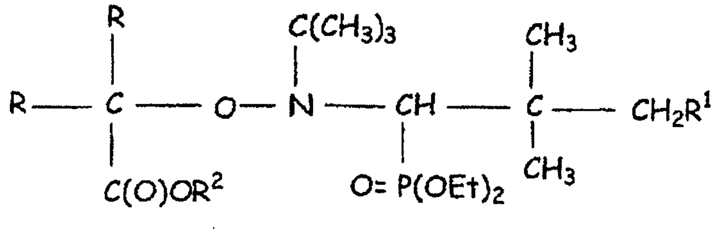

(I)

worin R für einen linearen oder verzweigten Alkylrest mit 1 bis 3 Kohlenstoffatomen steht, $R^1$ für ein Wasserstoffatom oder einen Rest:

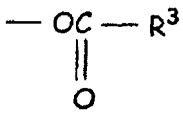

worin $R^3$ einen linearen oder verzweigten Alkylrest mit 1 bis 20 Kohlenstoffatomen bedeutet, steht, $R^2$ für ein Wasserstoffatom, einen linearen oder verzweigten Alkylrest mit 1 bis 8 Kohlenstoffatomen, einen Phenylrest, ein Alkalimetall wie Li, Na, K; $H_4N^+$, $Bu_4N^+$ oder $Bu_3HN^+$ steht, mit einer bei 120°C mittels EPR bestimmten kinetischen Dissoziationskonstante kd von mehr als 0,05 $s^{-1}$ und vorzugsweise mehr als 0,1 $s^{-1}$.

**13.** (Co)polymere nach Anspruch 12, **dadurch gekennzeichnet, daß** das oder die radikalisch polymerisierbaren Monomere ausgewählt sind unter vinylaromatischen Monomeren wie Styrol, a-Methylstyrol oder Natriumstyrolsulfonat, Dienen wie Butadien oder Isopren, (Meth)acrylsäure- oder (Meth)acrylat-Monomeren, wie Acrylsäure oder Salzen davon, Methylacrylat, Ethylacrylat, Butylacrylat, Ethylhexylacrylat, Phenylacrylat, 2-Hydroxyethylacrylat, 2-Methoxyethylacrylat, Methoxypolyethylenglykolacrylaten, Ethoxypolyethylenglykolacrylaten, Methoxypolypropylenglykolacrylaten, Methoxypolyethylenglykolpolypropylenglykolacrylaten oder Mischungen davon, 2-(Dimethylamino) ethylacrylat (ADAME), [2-(Acryloyloxy)ethyl]trimethylammoniumchlorid oder -sulfat, [2-(Acryloyloxy)ethyl]dimethylbenzylammoniumchlorid oder -sulfat, Methacrylsäure oder Salzen davon, Methylmethacrylat, Laurylmethacrylat, Cyclohexylmethacrylat, Allylmethacrylat, Phenylmethacrylat, 2-Hydroxyethylmethacrylat, 2-Hydroxypropylmethacrylat, 2-Ethoxyethylmethacrylat, Methoxypolyethylenglykolmethacrylaten, Ethoxypolyethylenglykolmethacrylaten, Methoxypolypropylenglykolmethacrylaten, Methoxypolyethylenglykolpolypropylenglykolmethacrylaten oder Mischungen davon, 2-(Dimethylamino)ethylmethacrylat (MADAME), [2-(Methacryloyloxy)ethyl]trimethylammoniumchlorid oder -sulfat, [2-(Methacryloyloxy)ethyl]dimethylbenzylammoniumchlorid oder -sulfat, 2,2,2-Trifluorethylmethacrylat, 3-Methacryloyloxypropyltrimethylsilan, Ethylenglykolmethacrylatphosphat, Hydroxyethylimidazolidonmethacrylat, Hydroxyethylimidazolidinonmethacrylat, 2-(2-Oxo-1-imidazolidinyl)ethylmethacrylat, Acrylnitril, gegebenenfalls substituierten (Meth)acrylamiden wie Acrylamid, 4-Acryloylmorpholin, N-Methylolacrylamid, Acrylamidopropyltrimethylammoniumchlorid (APTAC), Acrylamidomethylpropansulfonsäure (AMPS) oder Salzen davon, Methacrylamid, N-Methylolmethacrylamid oder Methacrylamidopropyltrimethylammoniumchlorid (MAPTAC), Itaconsäure, Maleinsäure oder Salzen davon, Maleinsäureanhydrid, Vinylpyridin, Vinylpyrrolidinon oder einer Mischung von mindestens zwei der oben aufgeführten Monomere.

**14.** Polymere nach Anspruch 13, **dadurch gekennzeichnet, daß** es sich bei mindestens einem der Monomere um Butylacrylat handelt.

**15.** Polymere nach Anspruch 13 oder 14, **dadurch gekennzeichnet, daß** es sich bei mindestens einem der Monomere um Methylacrylat handelt.

**16.** Copolymere nach Anspruch 13, **dadurch gekennzeichnet, daß** die Monomerenmischung aus Butylacrylat und Methylmethacrylat besteht.

**17.** Verwendung von (Co)polymeren nach einem der Ansprüche 12 bis 16 zur Durchführung von chemischen Umwandlungen.

**18.** Verwendung nach Anspruch 17 eines Polymers P1 der Struktur:

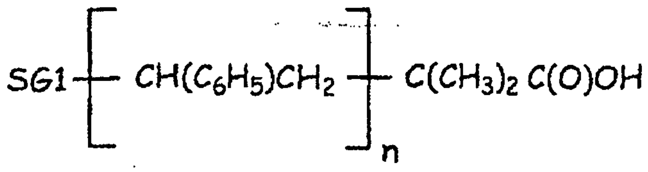

P1

zur Herstellung eines Polymers P2 der Struktur:

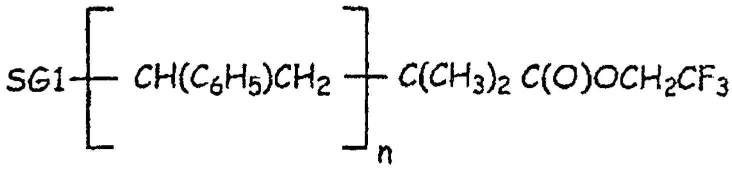

P2

**19.** Verwendung nach Anspruch 17 eines Polymers P1 der Struktur:

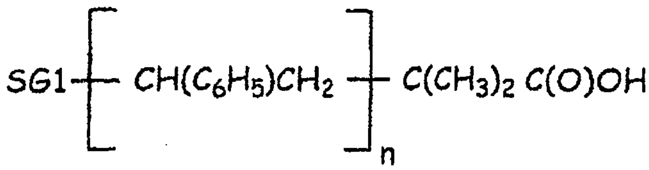

P1

zur Herstellung eines Polymers P3 der Struktur:

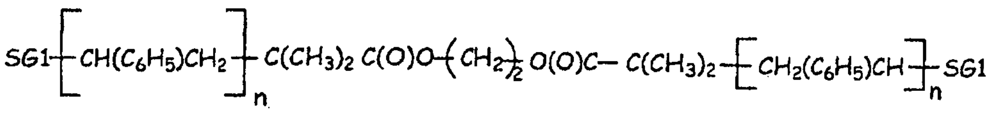

P3

**20.** Verwendung nach Anspruch 17 eines Polymers P1 der Struktur:

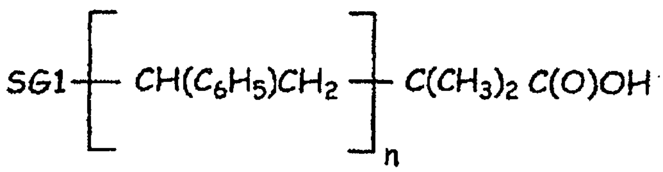

P1

zur Herstellung eines Polymers P4 der Struktur:

$$SG1-\left[CH(C_6H_5)CH_2\right]_n-C(CH_3)_2\,C(O)O(CH_2CH_2O)_mCH_3 \qquad P4$$

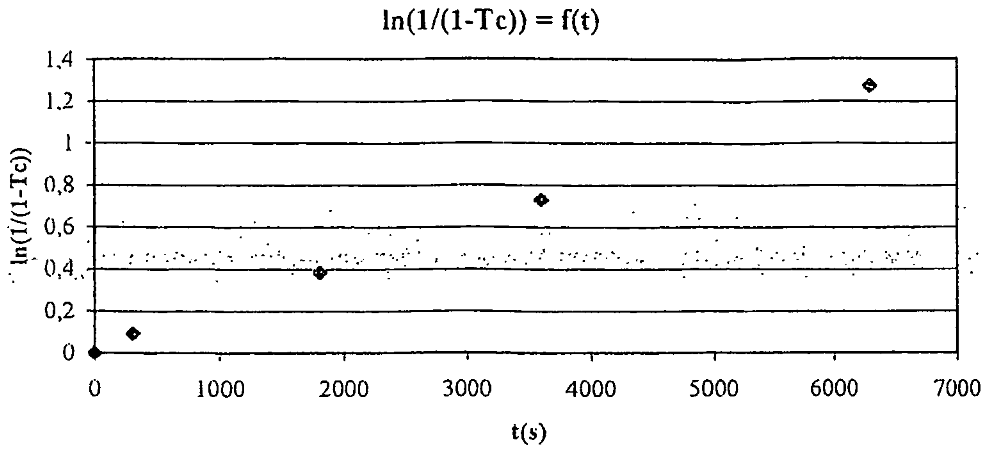


FIGURE 1

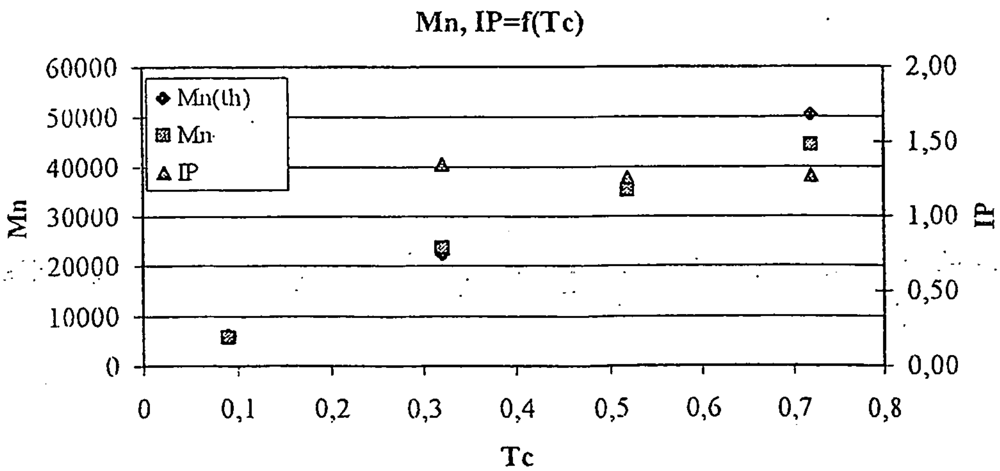


FIGURE 2

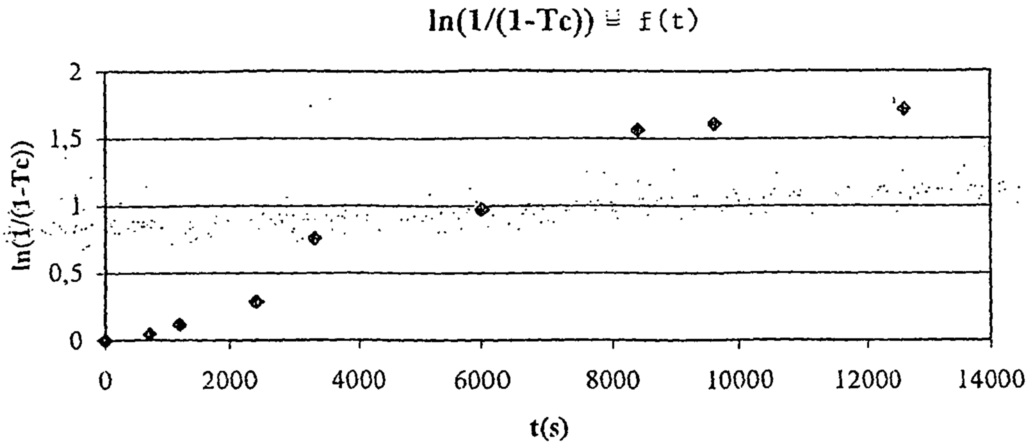


FIGURE 3

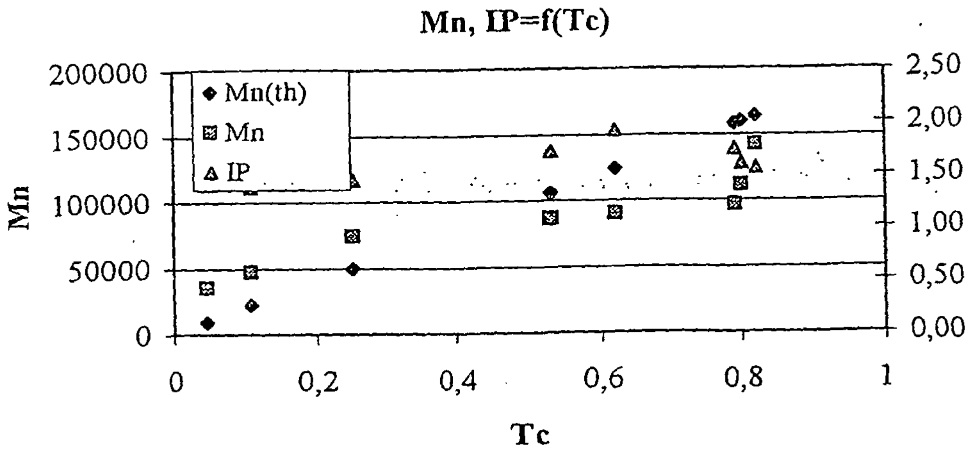


FIGURE 4

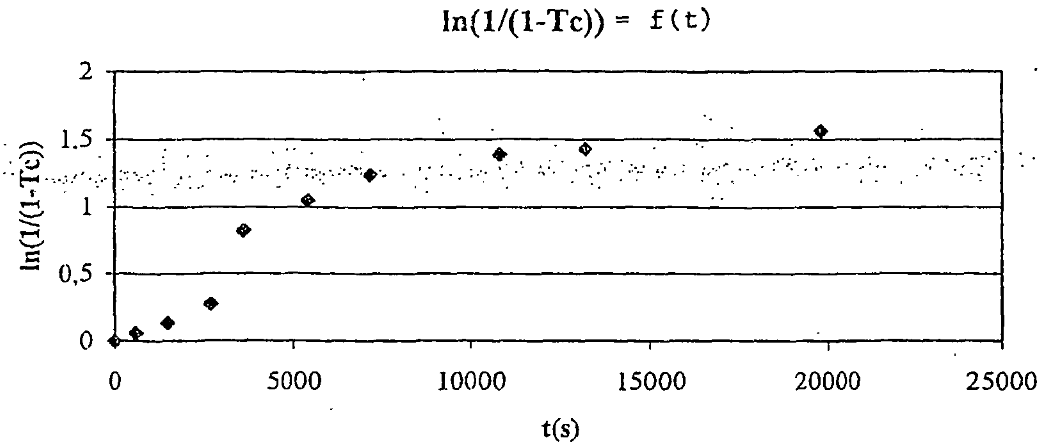


FIGURE 5

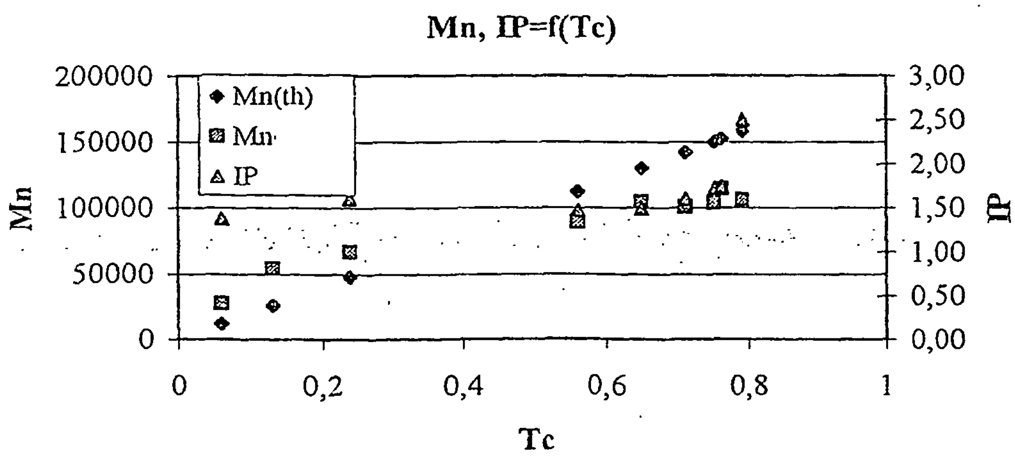


FIGURE 6

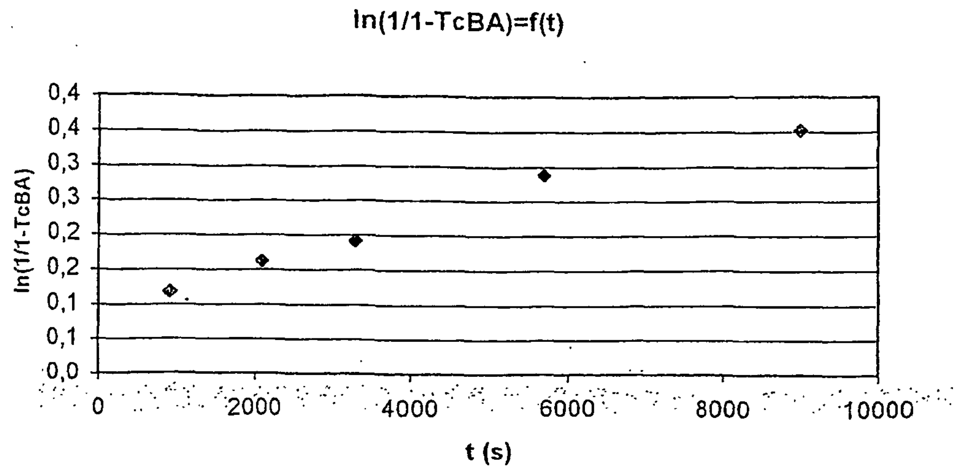


FIGURE 7

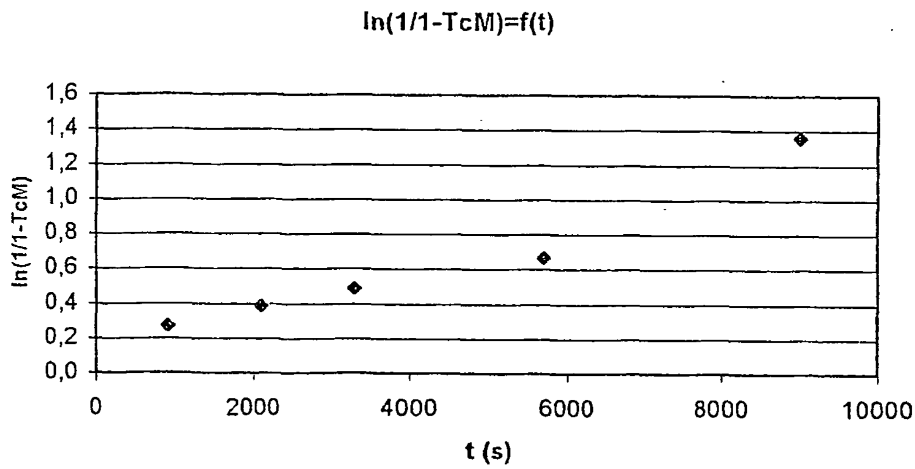


FIGURE 8

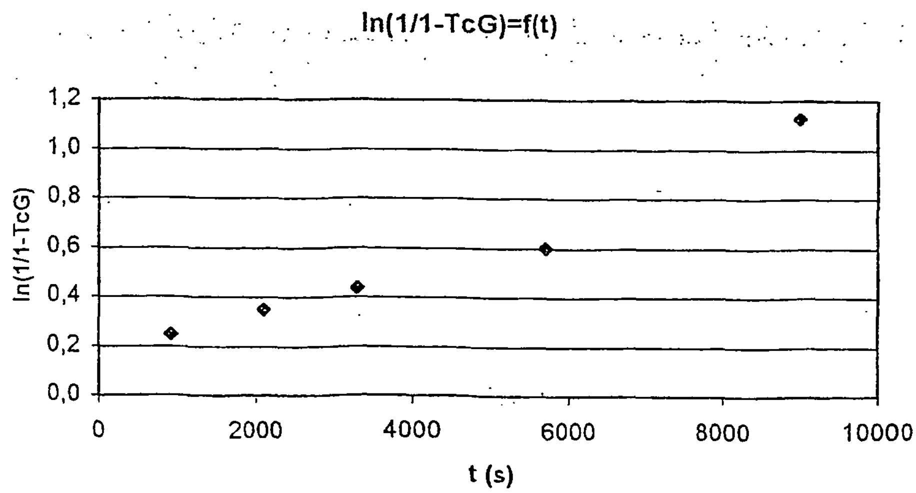


FIGURE 9

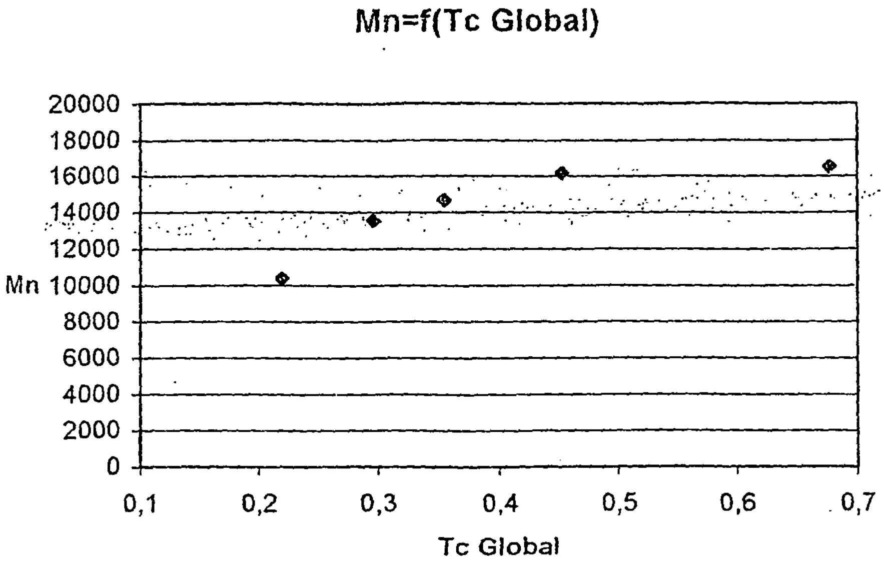


FIGURE 10

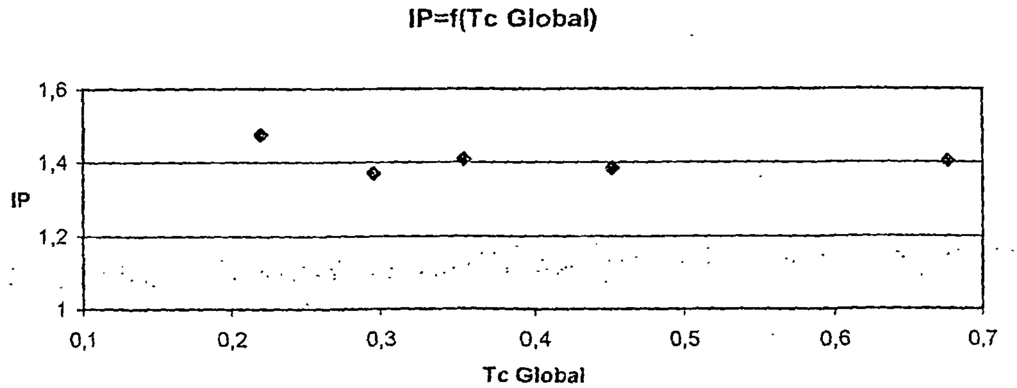


FIGURE 11

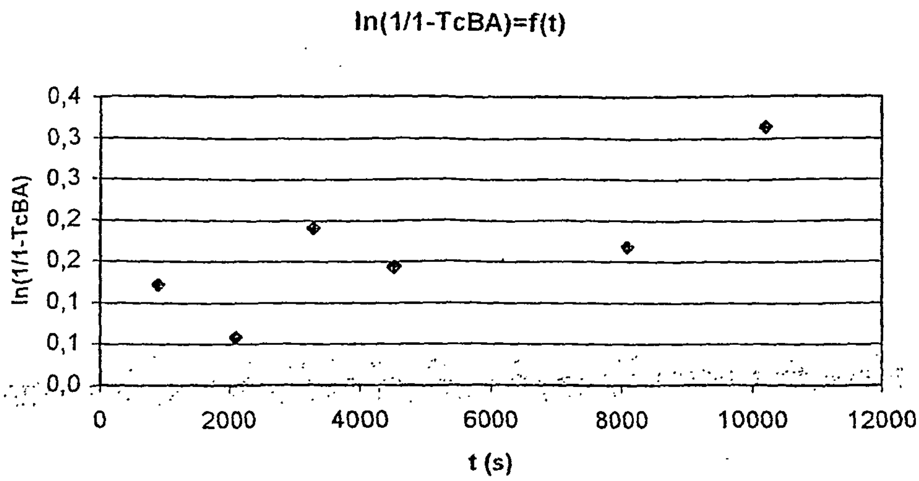


FIGURE 12

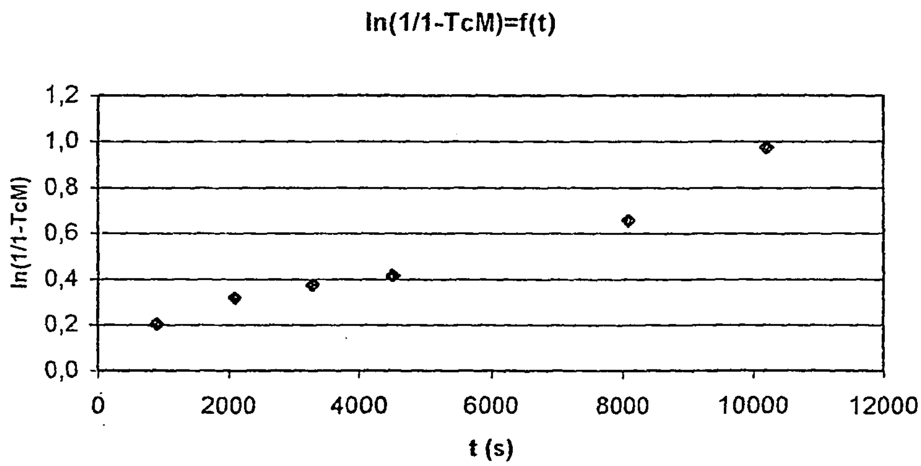


FIGURE 13

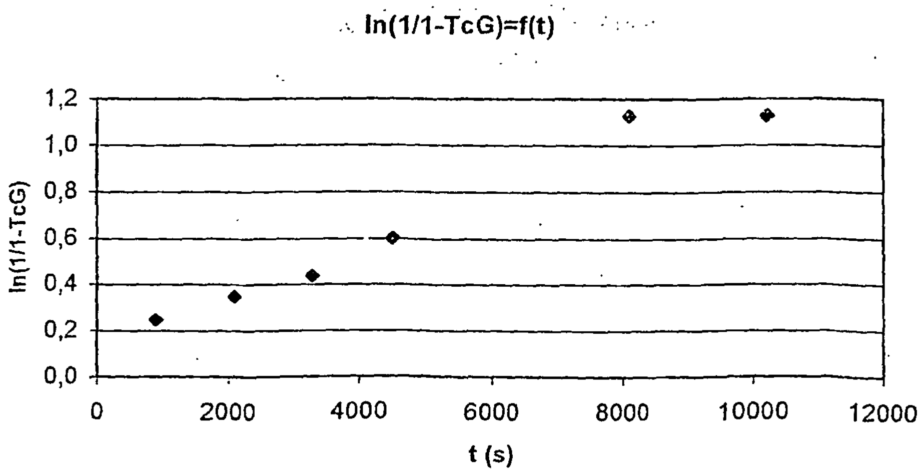


FIGURE 14

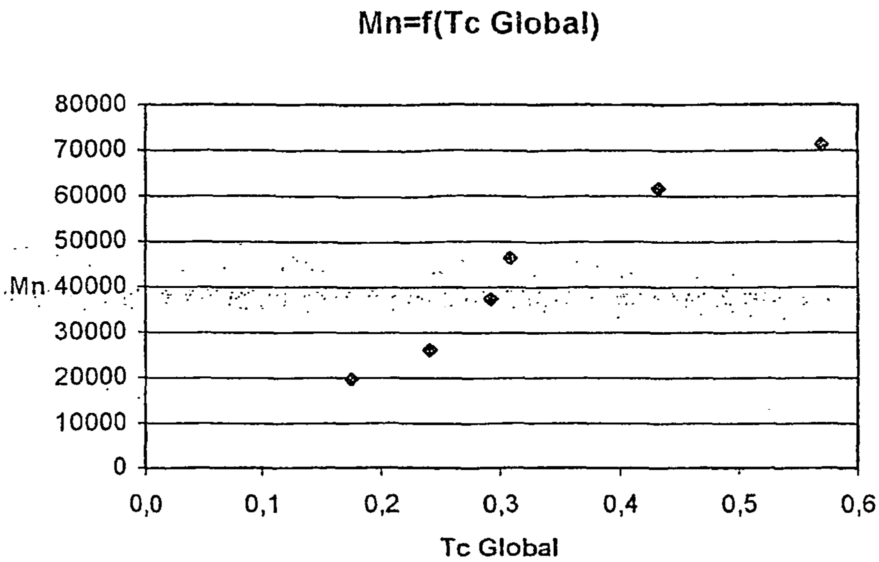


FIGURE 15

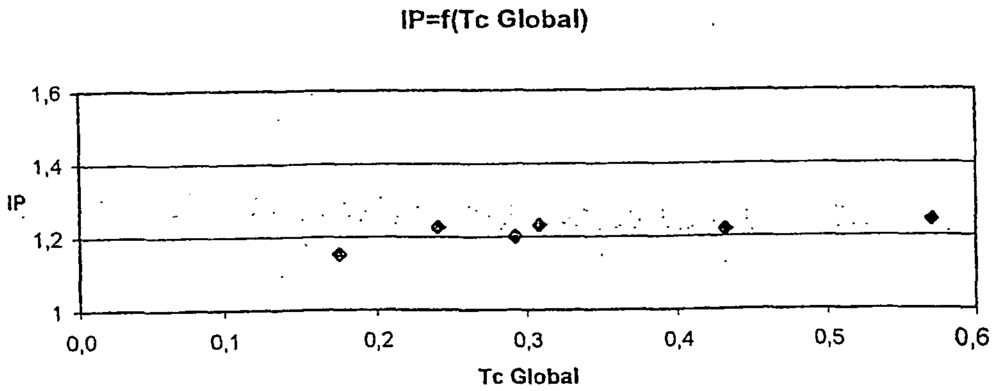


FIGURE 16